# EUROPEAN PATENT APPLICATION

(11) **EP 4 488 345 A1**
(43) Date of publication of application: **08.01.2025**
(21) Application number: 23763563.6
(22) Date of filing: 02.03.2023
(51) Int. Cl.: C09K 11/55, C09K 11/59, C09K 11/64

(54) **COMPOSITE CERAMIC, PHOSPHOR ELEMENT, LASER LIGHTING DEVICE, AND METHOD FOR PRODUCING COMPOSITE CERAMIC**

(30) Priority: 02.03.2022 WO PCT/JP2022/009002
(71) Applicant: OSAKA UNIVERSITY, Suita-shi Osaka 565-0871 (JP); Oxide Corporation, Hokuto-shi, Yamanashi 408-0302 (JP)
(72) Inventor: MINEMOTO, Hisashi, Suita-shi, Osaka 565-0871 (JP); HIGASHIKAWA, Masahiro, Suita-shi, Osaka 565-0871 (JP); FUJIOKA, Kana, Suita-shi, Osaka 565-0871 (JP); FUJI, Hiroshi, Suita-shi, Osaka 565-0871 (JP); YAMAMOTO, Kazuhisa, Suita-shi, Osaka 565-0871 (JP); KUSUNOKI, Tsuneo, Hokuto-shi, Yamanashi 408-0302 (JP); TOKUMITSU, Seika, Hokuto-shi, Yamanashi 408-0302 (JP); KAWABE, Hideo, Hokuto-shi, Yamanashi 408-0302 (JP)
(74) Representative: Plasseraud IP
(86) International application number: PCT/JP2023/007928
(87) International publication number: WO 2023/167306

(57) **Abstract**

Composite ceramic (1) is composed of a sintered body containing a garnet-based phosphor component (2), a nitride-based phosphor component (3), and a matrix component (4) that is at least one selected from the group consisting of MgO and Al₂O₃, the matrix component having a content of not less than 31 wt% and not more than 95 wt% of all components of the composite ceramic (1), and the matrix component being sintered so as to surround the garnet-based phosphor component and the nitride-based phosphor component.

## Description

### Technical Field

The present disclosure relates to composite ceramic concerning a garnet-based phosphor component, a nitride-based phosphor component, and a matrix component, a phosphor element and a laser lighting device each including the composite ceramic, and a method for producing composite ceramic.

### Background Art

Laser lighting devices are more energy saving, smaller in size, and higher in luminance than other lighting devices, and have already been started to be practically used as lighting devices for projectors and lighting devices for automobile headlights. Further, also in a household lighting market, existing light-emitting diode (LED) lighting devices and fluorescent lamps are expected to be replaced with laser lighting devices, and a laser lighting market is forecast to rapidly expand in the future.

However, in composite ceramic that is being practically used as a phosphor for such a laser lighting device, an yttrium aluminum garnet (YAG)-based phosphor that converts blue light to yellow is used as a phosphor component. For example, Patent Literature 1 discloses, as composite ceramic, a ceramic complex that contains, in an amount in a predetermined range, a phosphor phase containing Ce and composed of YAG, a matrix phase composed of at least one selected from the group consisting of Al₂O₃ and AlN, and an impurity.

Meanwhile, composite ceramic that contains a reddish phosphor which emits a reddish fluorescence has also been developed in recent years. For example, Patent Literature 2 discloses, as composite ceramic, a fluorescent substance molded body that is produced by sintering a mixture of AlN powder and phosphor powder by spark plasma sintering, melting the AlN powder, and then carrying out cooling. Note here that the reddish phosphor refers to a phosphor that emits red to orange light. Patent Literature 2 discloses that a nitride-based phosphor may be used for the phosphor powder. Citation List

### [Patent Literature]

[Patent Literature 1]
   Japanese Patent Application Publication, Tokukai, No. 2011-012215
[Patent Literature 2]
   Japanese Patent Application Publication, Tokukai, No. 2016-180076

### Summary of Invention

### Technical Problem

However, in order to achieve dense ceramic, it is necessary to sinter a raw material at a high temperature, and the high temperature during sintering makes it easy particularly for a nitride-based phosphor to deteriorate in characteristic. Originally, composite ceramic in which a nitride-based phosphor or AlN, which is a hardly sinterable body, is used is difficult to sinter. Thus, composite ceramic has not been achieved that contains a reddish phosphor, that can withstand laser excitation, and that is for high power excitation.

An aspect of the present disclosure has been made in view of the above-described problems, and an object thereof is to provide composite ceramic that can be relatively easily produced and that contains a reddish phosphor for laser lighting, a phosphor element and a laser lighting device each including the composite ceramic, and a method for producing such composite ceramic.

### Solution to Problem

In order to attain the object, composite ceramic in accordance with an aspect of the present disclosure is composite ceramic composed of a sintered body containing a garnet-based phosphor component, a nitride-based phosphor component, and a matrix component, the matrix component being at least one selected from the group consisting of MgO and Al₂O₃, the matrix component having a content in a range of not less than 31 wt% and not more than 95 wt% of all components of the composite ceramic, and the matrix component being sintered so as to surround the garnet-based phosphor component and the nitride-based phosphor component.

In order to attain the object, a phosphor element in accordance with an aspect of the present disclosure includes composite ceramic in accordance with an aspect of the present disclosure and a base material for fixing the composite ceramic.

In order to attain the object, a laser lighting device in accordance with an aspect of the present disclosure includes: a phosphor element in accordance with an aspect of the present disclosure; a laser light source that emits excitation light to the composite ceramic of the phosphor element; and a light collecting member that collects light output from the composite ceramic of the phosphor element.

In order to attain the object, a method for producing composite ceramic in accordance with an aspect of the present disclosure includes: a mixing step of mixing a first raw material powder containing a garnet-based phosphor component, a nitride-based phosphor component, and a matrix component; a first raw material powder accommodating step of accommodating the mixed first raw material powder in a mold; a sintering step of using spark plasma sintering or hot pressing to sinter the first raw material powder that has been accommodated in the mold; and a mold release step of removing, from the mold, a sintered body obtained in the sintering step.

### Advantageous Effects of Invention

An aspect of the present disclosure makes it possible to provide composite ceramic that can be relatively easily produced and that contains a reddish phosphor for laser lighting, a phosphor element and a laser lighting device each including the composite ceramic, and a method for producing such composite ceramic.

### Brief Description of Drawings

Fig. 1 is a cross-sectional view illustrating an example of a structure of composite ceramic in accordance with Embodiment 1.
Fig. 2 is a flowchart showing an example of a method for producing the composite ceramic in accordance with Embodiment 1.
Fig. 3 is a cross-sectional view illustrating an example of a structure of composite ceramic in accordance with Embodiment 2.
Fig. 4 is a cross-sectional view illustrating an example of a structure of composite ceramic in accordance with Embodiment 3.
Fig. 5 is a cross-sectional view illustrating an example of a structure of composite ceramic in accordance with Embodiment 4.
Fig. 6 is a view illustrating composite ceramic having one main surface on which an anti-reflection coating film is provided, according to Embodiment 5.
Fig. 7 is a cross-sectional view illustrating an example of a phosphor element in accordance with Embodiment 5.
Fig. 8 is a flowchart showing an example of a method for producing the phosphor element illustrated in Fig. 7.
Fig. 9 is a cross-sectional view illustrating an example of a laser lighting device in accordance with Embodiment 6.
Fig. 10 is a triangular diagram showing contents of a nitride-based phosphor component, a matrix component, a garnet-based phosphor component in Examples 1 to 5 and Comparative Examples 1 to 5.
Fig. 11 is a diagram showing an XRD pattern of composite ceramic obtained in Example 1.
Fig. 12 is a diagram showing laser power dependence of fluorescence power of the composite ceramic obtained in Example 1.
Fig. 13 is a diagram showing a fluorescence spectrum of the composite ceramic obtained in Example 1.
Fig. 14 is a diagram showing an example of a SEM image of composite ceramic obtained in Example 2.
Fig. 15 is a diagram showing an XRD pattern of the composite ceramic obtained in Example 2.
Fig. 16 is a diagram showing laser power dependence of fluorescence power of the composite ceramic obtained in Example 2.
Fig. 17 is a diagram showing a fluorescence spectrum of the composite ceramic obtained in Example 2.
Fig. 18 is a diagram showing laser power dependence of fluorescence power of composite ceramic obtained in Example 3.
Fig. 19 is a diagram showing a fluorescence spectrum of the composite ceramic obtained in Example 3.
Fig. 20 is a diagram showing laser power dependence of fluorescence power of composite ceramic obtained in Comparative Example 1.
Fig. 21 is a diagram showing a fluorescence spectrum of the composite ceramic obtained in Comparative Example 1.
Fig. 22 is a triangular diagram showing contents of a nitride-based phosphor component, a matrix component, a garnet-based phosphor component in Examples 6 and 7 and Comparative Examples 6 to 9.
Fig. 23 is a diagram showing laser power dependence of fluorescence power of composite ceramic obtained in Example 6.
Fig. 24 is a diagram showing a fluorescence spectrum of the composite ceramic obtained in Example 6.
Fig. 25 is a diagram showing laser power dependence of fluorescence power of composite ceramic obtained in Examples 6 and 7.
Fig. 26 is a triangular diagram showing contents of a nitride-based phosphor component, a matrix component, a garnet-based phosphor component in Examples 8 to 12 and Comparative Examples 10 to 13.
Fig. 27 is a triangular diagram showing contents of a nitride-based phosphor component, a matrix component, a garnet-based phosphor component in Examples 13 to 18 and Comparative Examples 14 to 17.
Fig. 28 is a diagram showing a fluorescence power characteristic before and after annealing treatment in composite ceramic of Reference example 12.
Fig. 29 is a diagram showing a fluorescence power characteristic before and after annealing treatment in composite ceramic of Reference example 13.
Fig. 30 is a diagram showing excitation light power tolerance of a phosphor element produced from composite ceramic of Example 18.
Fig. 31 is a diagram showing a characteristic of fluorescence power generated by continuous laser light irradiation.

### Description of Embodiments

The following description will discuss an embodiment of the present disclosure. Note that for convenience, members having functions identical to those of the respective previously described members are given respective identical reference numerals, and a description of those members is not repeated. Further, Embodiment 2 and subsequent embodiments will discuss differences from the embodiment(s) described earlier. It is needless to say that it is possible to alter Embodiment 2 and subsequent embodiments in a manner similar to the embodiment(s) described earlier, unless otherwise stated. Further, the expression "A to B" for two numbers A and B is intended to mean "not less than A and not more than B" unless otherwise stated.

### [Embodiment 1]

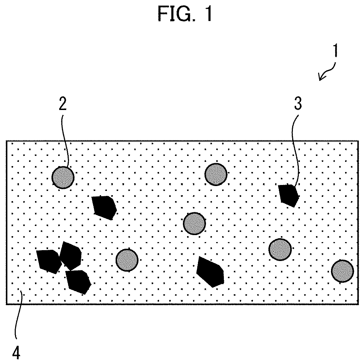

Fig. 1 is a cross-sectional view illustrating an example of a structure of composite ceramic 1 in accordance with the present embodiment.

The composite ceramic 1 in accordance with the present embodiment is a multi-wavelength light-emitting ceramic complex composed of a sintered body containing a phosphor component having two or more types of emission wavelengths and a matrix component.

The composite ceramic 1 illustrated in Fig. 1 contains a garnet-based phosphor component 2, a nitride-based phosphor component 3, and a matrix component 4, and has a structure in which the matrix component 4 is sintered so as to surround the garnet-based phosphor component 2 and the nitride-based phosphor component 3.

Thus, as illustrated in Fig. 1, the composite ceramic 1 has a sea-island structure in which the garnet-based phosphor component 2 and the nitride-based phosphor component 3 are mixed in an island-like manner in the matrix component 4. That is, the composite ceramic 1 has a structure in which the garnet-based phosphor component 2 and the nitride-based phosphor component 3 are dispersed in an island-like manner in the matrix component 4 that is like the sea and that seems to be relatively continuous. The matrix component 4 is filled between the garnet-based phosphor component 2 and the nitride-based phosphor component 3.

The garnet-based phosphor component 2, the nitride-based phosphor component 3, and the matrix component 4 are adhered to each other.

The composite ceramic 1 has at least three phases, i.e., a first phosphor phase composed of the garnet-based phosphor component 2, a second phosphor phase composed of the nitride-based phosphor component 3, and a matrix phase composed of the matrix component 4.

Thus, the composite ceramic 1 has a structure in which at least the three phases are mixed, and phases adjacent to each other are adhered together. Note here that the structure in which at least the three phases are mixed, and phases adjacent to each other are adhered together refers to a structure in which the three phases are separated into respective regions of the phases in a solid without forming a solid solution, and phases adjacent to each other are adhered together. Further, the structure also includes a case where a sintering agent or an impurity are present at a grain boundary. Alternatively, the composite ceramic includes composite ceramic that clearly has a basically three-phase structure even in a case where an alteration phase or a melt phase is slightly present between particles.

Note that a solid solution in which at least adjacent phases among three or more phases form a solid solution is removed from the composite ceramic 1. Further, a joined product in which three or more phases are merely directly joined, and a composition in which at least the three phases are solidified by at least one selected from the group consisting of inorganic glass and an organic binder are removed from the composite ceramic 1.

### (Garnet-based phosphor component 2)

In the present disclosure, the garnet-based phosphor component 2 refers to a phosphor whose crystal structure has a garnet structure. The garnet-based phosphor component 2 is a phosphor that has a high refractive index and that has an excellent fluorescence property. For example, the garnet-based phosphor component 2 emits a yellow to green yellowish fluorescence by blue excitation light. Further, the garnet-based phosphor component 2 scatters and transmits light that is included in excitation light and that has not contributed to excitation. Thus, the garnet-based phosphor component 2 outputs scattered blue light and a yellowish fluorescence.

The garnet-based phosphor component 2 has excellent heat resistance and can prevent or reduce its deterioration even in a case where the garnet-based phosphor component 2 is irradiated with, for example, a high-power excitation light laser diode (LD).

Examples of the garnet-based phosphor component 2 include an yttrium aluminum garnet (YAG)-based phosphor. Note that the YAG-based phosphor refers to a phosphor that can belong to a crystal structure of a YAG phosphor.

Examples of the YAG-based phosphor include at least one selected from the group consisting of (Ce, Y)₃Al₅O₁₂, (Ce, Lu)₃Al₅O₁₂, (Ce, Lu, Y)₃Al₅O₁₂, and (Ce, Lu, Y)₃(Al, Ga)₅O₁₂. The composite ceramic 1 that contains the YAG-based phosphor as the garnet-based phosphor component 2 makes it possible to easily achieve the composite ceramic 1 that outputs a yellow to green yellowish fluorescence. Further, the composite ceramic 1 that contains the YAG-based phosphor as the garnet-based phosphor component 2 makes it possible to obtain the composite ceramic 1 that has an excellent fluorescence property.

### (Nitride-based phosphor component 3)

In the present disclosure, the nitride-based phosphor component 3 refers to a phosphor containing nitrogen. Specific examples of the nitride-based phosphor component 3 include at least one type of phosphor selected from the group consisting of a nitride phosphor and an oxynitride phosphor.

The nitride-based phosphor component 3 is a reddish phosphor that has an excellent fluorescence property and that emits a red to orange reddish fluorescence. For example, the nitride-based phosphor component 3 emits a reddish fluorescence by blue excitation light. Further, the nitride-based phosphor component 3 scatters and transmits light that is included in excitation light and that has not contributed to excitation. Thus, the nitride-based phosphor component 3 outputs scattered blue light and a reddish fluorescence. The composite ceramic 1 that contains the nitride-based phosphor component 3 makes it possible to obtain ternary composite ceramic that outputs a warm white fluorescence. Further, the composite ceramic 1 that contains the nitride-based phosphor component 3 makes it possible to obtain the composite ceramic 1 that has an excellent fluorescence property.

Examples of the nitride-based phosphor component 3 include at least one type of nitride phosphor selected from the group consisting of Sr₂Si₅N₈, (Sr, Ba)₂Si₅N₈, and (Ca, Sr, Ba)₂Si₅N₈, the at least one type each having been activated by at least one element selected from the group consisting of Eu and Ce. Hereinafter, such a nitride phosphor is sometimes referred to as a nitride phosphor (A) for convenience of description. Eu and Ce are activators and are doped in crystals. Thus, examples of the nitride-based phosphor component 3 include nitride phosphors (A) such as Eu : Sr₂Si₅N₈, Eu : (Sr, Ba)₂Si₅N₈, Eu : (Ca, Sr, Ba)₂Si₅N₈, Ce : Sr₂Si₅N₈, Ce : (Sr, Ba)₂Si₅N₈, Ce : (Ca, Sr, Ba)Si₅N₈, (Eu, Ce) : Sr₂Si₅N₈, (Eu, Ce) : (Sr, Ba)₂Si₅N₈, and (Eu, Ce) : (Ca, Sr, Ba)₂Si₅N₈.

The composite ceramic 1 that contains such an alkaline earth silicon nitride as the nitride-based phosphor component 3 makes it possible to produce the composite ceramic 1 that emits a stable reddish fluorescence.

In such a nitride phosphor (A), at least one selected from the group consisting of part of Si and part of N in the above composition formula may be substituted. Si is substituted with Al in a case where Si is partially substituted. N is substituted with O in a case where N is partially substituted.

Thus, the nitride-based phosphor component 3 may be a nitride phosphor in which Si is partially substituted with Al in Sr₂Si₅N₈, (Sr, Ba)₂Si₅N₈, or (Ca, Sr, Ba)₂Si₅N₈, or may be an oxynitride phosphor in which N is partially substituted with O in Sr₂Si₅N₈, (Sr, Ba)₂Si₅N₈, or (Ca, Sr, Ba)₂Si₅N₈.Sr₂Si₅N₈. Alternatively, the nitride-based phosphor component 3 may be an oxynitride phosphor in which Si is partially substituted with Al, and N is partially substituted with O. For example, examples of the nitride-based phosphor component 3 include (Sr, Ba)₂(Si, Al)₅N₈ and (Sr, Ba)₂(Si, Al)₅(N, O)₈, each of which has been activated by at least one element selected from the group consisting of Eu and Ce.

The composite ceramic 1 that contains, as the nitride-based phosphor component 3, at least one selected from the group consisting of such a nitride phosphor and such an oxynitride phosphor makes it possible to achieve the composite ceramic 1 that has higher reliability.

Further, the nitride-based phosphor component 3 may be, for example, at least one type of nitride phosphor selected from the group consisting of CaAlSiN₃ and (Ca, Sr)AlSiN₃, the at least one type each having been activated by at least one element selected from the group consisting of Eu and Ce. Hereinafter, such a nitride phosphor is sometimes referred to as a nitride phosphor (B) for convenience of description. Eu and Ce are activators and are doped in crystals. Thus, examples of the nitride-based phosphor component 3 may include nitride phosphors (B) such as Eu : CaAlSiN₃, Eu : (Ca, Sr)AlSiN₃, Ce : CaAlSiN₃, Ce : (Ca, Sr)AlSiN₃, (Eu, Ce) : CaAlSiN₃, and (Eu, Ce) : (Ca, Sr)AlSiN₃.

Furthermore, examples of the nitride-based phosphor component 3 may include not only the nitride phosphors (A) and (B) but also (La, Y)₃Si₆N₁₁ activated by Ce. Examples of the nitride-based phosphor component (3) include at least one type of nitride-based phosphor component selected from the group consisting of (La)₃Si₆N₁₁, (La, Y)₃Si₆N₁₁, and (La, Y, Lu)₃Si₆N₁₁, the at least one type each having been activated by at least one element selected from the group consisting of Eu and Ce. That is, the nitride-based phosphor component 3 is at least one type of nitride-based phosphor component selected from the group consisting of (La)₃Si₆N₁₁, (La, Y)₃Si₆N₁₁, and (La, Y, Lu)₃Si₆N₁₁ (also referred to as "La₃Si₆N₁₁-based phosphor component"), the at least one type each having been activated by at least one element selected from the group consisting of Eu and Ce. Hereinafter, such a nitride phosphor is sometimes referred to as a nitride phosphor (C) for convenience of description. Eu and Ce are activators and are doped in crystals.

The nitride phosphors (A), (B), and (C), and a nitride phosphor other than the nitride phosphors (A) and (B) may be used separately or may be used in combination provided that those nitride phosphors neither form a solid solution nor react with each other.

### (Matrix component 4)

The matrix component 4 is at least one selected from the group consisting of magnesium oxide (MgO) and aluminum oxide (Al₂O₃). The matrix component 4 may be MgO, may be Al₂O₃, or may be a mixture of MgO and Al₂O₃.

The composite ceramic 1 in accordance with the present embodiment has an excitation light power tolerance of not less than 0.5 kW/cm². Thus, the composite ceramic 1 in accordance with the present embodiment is composite ceramic that has high fluorescence power with respect to excitation light power, that can withstand laser excitation, that has high excitation light power tolerance, and that is for low color temperature. For this reason, the present embodiment makes it possible to achieve a laser phosphor element that is practical and that does not reach fluorescence saturation even at relatively high power.

Note that, since excitation light power tolerance that is higher makes it possible to withstand laser excitation at high power, an upper limit of the excitation light power tolerance is not particularly limited. However, the excitation light power tolerance has an upper limit of 100 kW/cm² in view of excitation light power tolerance (laser power tolerance) of realistically available laser light sources or various optical components. Thus, the composite ceramic 1 in accordance with the present embodiment has an excitation light power tolerance in a range of preferably not less than 0.5 kW/cm², more preferably not less than 1 kW/cm², even more preferably not less than 3 kW/cm², and desirably not more than 100 kW/cm².

In the present disclosure, the excitation light power tolerance refers to a value at which fluorescence power reaches saturation with respect to excitation light power (specifically, laser excitation light power) per 1 cm². The excitation light power tolerance can be measured by a phosphor evaluation device including a laser light source, an integrating sphere, and a spectrometer.

### (Contents of components in composite ceramic 1)

In the composite ceramic 1, the matrix component 4 has a content in a range of not less than 31 wt% and not more than 95 wt% of all components of the composite ceramic 1.

Thus, the composite ceramic 1 in accordance with the present example embodiment is composite ceramic composed of a sintered body containing the garnet-based phosphor component 2, the nitride-based phosphor component 3, and the matrix component 4, the matrix component 4 being at least one selected from the group consisting of MgO and Al₂O₃, the matrix component 4 having a content in a range of not less than 31 wt% and not more than 95 wt% of all components of the composite ceramic 1, and the matrix component 4 being sintered so as to surround the garnet-based phosphor component 2 and the nitride-based phosphor component 3.

According to the present example embodiment, this makes it possible to provide the composite ceramic 1 that can be relatively easily produced and that contains a reddish phosphor for laser lighting.

According to study by the inventors of the present invention, it is possible to further enhance the excitation light power tolerance by increasing the content of the matrix component 4 in the composite ceramic 1. Thus, the content of the matrix component 4 in the composite ceramic 1 is preferably set closer to the upper limit in the above range. For this reason, the content of the matrix component 4 in the composite ceramic 1 is preferably not less than 45 wt%, and more preferably not less than 60 wt%.

As described above, the content of the matrix component 4 in the composite ceramic 1 is preferably in a range of preferably not less than 31 wt% and not more than 95 wt%, and more preferably not less than 31 wt% and not more than 90 wt%, of all the components of the composite ceramic 1.

Thus, a content of a total of the garnet-based phosphor component 2 and the nitride-based phosphor component 3 in the composite ceramic 1 is preferably in a range of not less than 5 wt% and not more than 69 wt% of all components of the composite ceramic 1.

With this, as described earlier, it is possible to provide the composite ceramic 1 that can be relatively easily produced and that contains a reddish phosphor for laser lighting. Further, the above configuration makes it possible to obtain the composite ceramic 1 that has a structure in which the matrix component 4 is sintered so as to surround the garnet-based phosphor component 2 and the nitride-based phosphor component 3 and in which phases adjacent to each other are adhered together.

Respective contents of the garnet-based phosphor component 2 and the nitride-based phosphor component 3 in the composite ceramic 1 may be set as appropriate so that the content of the total of the garnet-based phosphor component 2 and the nitride-based phosphor component 3 is in the above range, and are not particularly limited. A desired emission spectrum can be obtained by adjusting as appropriate the respective contents of the garnet-based phosphor component 2 and the nitride-based phosphor component 3 in accordance with types of the garnet-based phosphor component 2 and the nitride-based phosphor component 3.

For example, the garnet-based phosphor component 2 emits a yellow fluorescence or a green fluorescence by blue excitation light as described earlier. The nitride-based phosphor component 3 emits a reddish fluorescence by blue excitation light as described earlier. Further, these phosphors each scatter and transmit light that is included in excitation light and that has not contributed to excitation. Thus, in a case where the composite ceramic 1 is irradiated with blue excitation light, reddish warm white light is output in which scattered blue light, a yellowish fluorescence, and a reddish fluorescence are mixed.

The content of the garnet-based phosphor component 2 in the composite ceramic 1 is in a range of preferably not less than 2 wt% and not more than 65 wt%, more preferably not less than 2 wt% and not more than 59 wt%, and more preferably not less than 4 wt% and not more than 59 wt%, of all the components of the composite ceramic 1.

The content of the nitride-based phosphor component 3 in the composite ceramic 1 is in a range of preferably not less than 2 wt% and not more than 65 wt%, more preferably not less than 2 wt% and not more than 59 wt%, and more preferably not less than 4 wt% and not more than 59 wt%, of all the components of the composite ceramic 1.

This makes it possible to obtain a warm white emission spectrum that also contains a red to orange reddish fluorescence and that is particularly suitable for, for example, household lighting devices, lighting devices for projectors, and lighting devices for automobile headlights, for exterior lighting, and for distant lighting.

However, according to study by the inventors of the present invention, a higher content of the nitride-based phosphor component 3 in the composite ceramic 1 tends to make it easier for fluorescence power to reach saturation with respect to excitation light power. For this reason, a reduction in content of the nitride-based phosphor component 3 in the composite ceramic 1 makes it possible to enhance excitation light power tolerance. Thus, the content of the nitride-based phosphor component 3 in the composite ceramic 1 is preferably set closer to the lower limit in the above range. For this reason, the content of the nitride-based phosphor component 3 in the composite ceramic 1 is more preferably not more than 60 wt%, and even more preferably not more than 40 wt%.

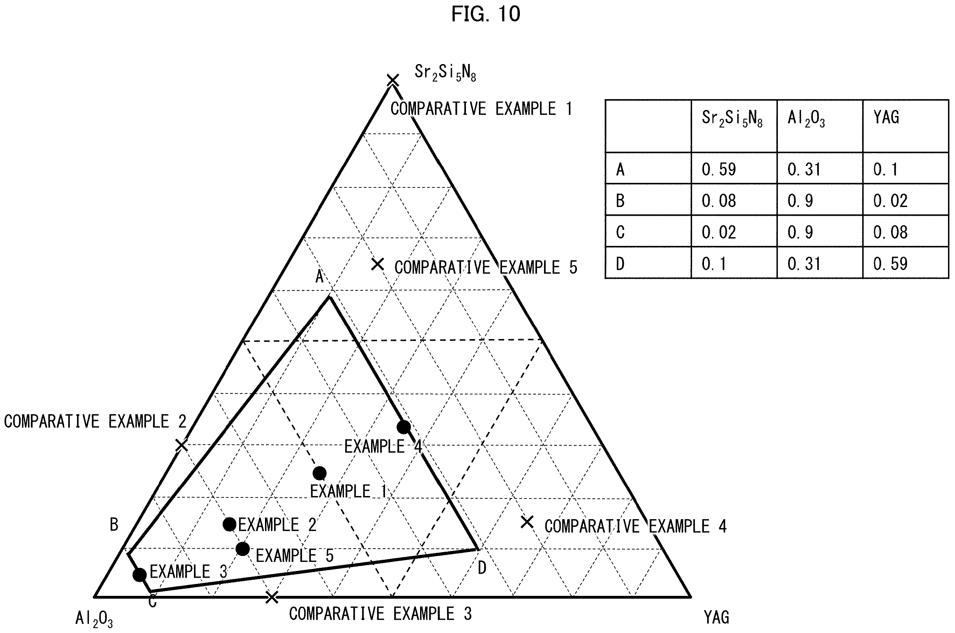

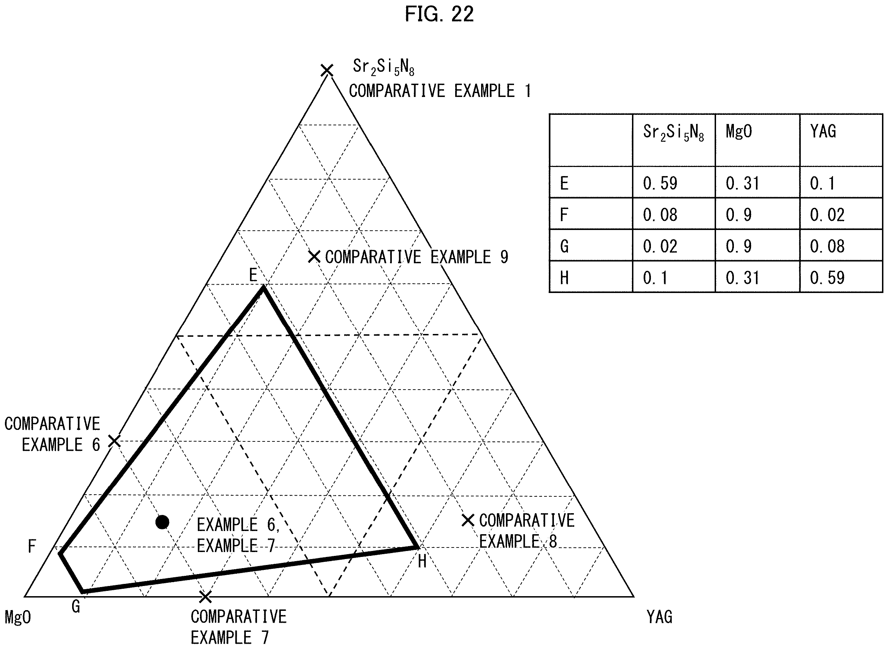

Further, in the composite ceramic 1, in a triangular diagram where a content of a total of the nitride-based phosphor component 3, the matrix component 4, and the garnet-based phosphor component 2 is 100 wt%, respective contents of the nitride-based phosphor component 3, the matrix component 4, and the garnet-based phosphor component 2 are particularly preferably in a range surrounded by straight lines connecting the following points A to D, for example, as in examples illustrated in Figs. 10 and 22 discussed later.

Note here that the point A refers to a point at which the content of the nitride-based phosphor component 3 is 59 wt%, the content of the matrix component 4 is 31 wt%, and the content of the garnet-based phosphor component 2 is 10 wt%.

The point B refers to a point at which the content of the nitride-based phosphor component 3 is 8 wt%, the content of the matrix component 4 is 90 wt%, and the content of the garnet-based phosphor component 2 is 2 wt%.

The point C refers to a point at which the content of the nitride-based phosphor component 3 is 2 wt%, the content of the matrix component 4 is 90 wt%, and the content of the garnet-based phosphor component 2 is 8 wt%.

The point D refers to a point at which the content of the nitride-based phosphor component 3 is 10 wt%, the content of the matrix component 4 is 31 wt%, and the content of the garnet-based phosphor component 2 is 59 wt%.

This makes it possible to provide the composite ceramic 1 that has high fluorescence power with respect to excitation light power, that can withstand laser excitation, that has high excitation light power tolerance, and that is for low color temperature.

### (Particle sizes of components of composite ceramic 1)

Particle sizes of the garnet-based phosphor component 2 and the nitride-based phosphor component 3 that are contained in the composite ceramic 1 need only be set as appropriate, in accordance with types of the garnet-based phosphor component 2 and the nitride-based phosphor component 3, so that a desired emission spectrum can be obtained. For this reason, the particle sizes of the garnet-based phosphor component 2 and the nitride-based phosphor component 3 are not particularly limited.

However, for a raw material powder used as a raw material of the garnet-based phosphor component 2 (in other words, the garnet-based phosphor component before sintering), a raw material powder having a number average particle size in a range of not less than 3 µm and not more than 50 µm is suitably used. In a case where the raw material powder of the garnet-based phosphor component 2 has a number average particle size in the above range, it is difficult for the garnet-based phosphor component 2 to react with the matrix component 4 and the nitride-based phosphor component 3.

Similarly, for a raw material powder used as a raw material of the nitride-based phosphor component 3 (in other words, the garnet-based phosphor component before sintering), a raw material powder having a number average particle size in a range of not less than 3 µm and not more than 50 µm is suitably used. In a case where the raw material powder of the nitride-based phosphor component 3 has a number average particle size in the above range, it is difficult for the nitride-based phosphor component 3 to react with the matrix component 4 and the garnet-based phosphor component 2.

Note that the number average particle sizes of these raw material powders may be values measured by a scanning electron microscope (SEM). In a case where commerciallyavailable raw material powders are used as they are for these raw material powders, the number average particle sizes of the raw material powders may have specifications described in an invoice or a catalog.

Depending on a sintering method, these raw material powders may be subjected to grain growth by sintering. For this reason, the garnet-based phosphor component 2 that is contained per unit volume of the composite ceramic 1 preferably has a number average particle size, for example, in a range of not less than 3 µm and not more than 50 µm. Similarly, the nitride-based phosphor component 3 that is contained per unit volume of the composite ceramic 1 preferably has a number average particle size, for example, in a range of not less than 3 µm and not more than 50 µm. Note that the phosphor particles ideally have a size of primary particles, but may have a size of secondary particles in which some of the primary particles are adhered together.

Further, as described earlier, the matrix component 4 is sintered so as to surround the garnet-based phosphor component 2 and the nitride-based phosphor component 3. For this reason, a raw material powder that is used as a raw material of the matrix component 4 (in other words, the matrix component before sintering) preferably has a number average particle size that is smaller than the number average particle size of each of the raw material powders of the garnet-based phosphor component 2 and the nitride-based phosphor component 3. Meanwhile, a raw material powder that has a too small particle size causes a problem of cost or moisture absorbency.

For this reason, from the viewpoint of reactivity, a raw material powder having a number average particle size in a range of not less than 0.01 µm and not more than 1 µm is suitably used for the raw material powder that is used as a raw material of the matrix component 4.

From the viewpoint of reactivity, the matrix component 4 preferably has a number average particle size that is smaller than the number average particle sizes of the garnet-based phosphor component 2 and the nitride-based phosphor component 3. As in the case of the raw material powder of the garnet-based phosphor component 2 and the raw material powder of the nitride-based phosphor component 3, depending on a sintering method, the raw material powder of the matrix component 4 is sometimes subjected to grain growth by sintering.

For this reason, the matrix component 4 that is contained per unit volume of the composite ceramic 1 preferably has a number average particle size in a range of not less than 0.01 µm and not more than 10 µm.

In a case where the matrix component 4 that is contained per unit volume of the composite ceramic 1 has a number average particle size in the above range, it is possible to further reduce a sintering temperature. Thus, composite ceramic that contains a reddish phosphor can be more easily produced in a wide composition range.

Further, the matrix component 4 that has a number average particle size in the above range enters a gap between the garnet-based phosphor component 2 and the nitride-based phosphor component 3. This makes it possible to obtain a sintered body having a dense structure. Thus, the matrix component 4 that has a number average particle size in the above range makes it possible to obtain the composite ceramic 1 that has a structure in which the matrix component 4 is sintered so as to surround the garnet-based phosphor component 2 and the nitride-based phosphor component 3 and in which phases adjacent to each other are adhered together.

Further, it is possible to optimize a phase structure of the structure of the composite ceramic 1 by setting the number average particle size of the garnet-based phosphor component 2, the number average particle size of the nitride-based phosphor component 3, and the number average particle size of the matrix component 4 in the respective above ranges.

The number average particle size of the garnet-based phosphor component 2, the number average particle size of the nitride-based phosphor component 3, and the number average particle size of the matrix component 4 can be measured by a SEM. Further, number average particle sizes of the other components described later can be similarly measured by a SEM.

Note that, in the present disclosure, "particle size" means a particle diameter in a case where a component to be subjected to measurement is a perfect sphere. From the viewpoint of ease of controlling a light emission property, all of the garnet-based phosphor component 2, the nitride-based phosphor component 3, the matrix component 4, and the raw material powders thereof desirably have a perfect sphere shape. However, the garnet-based phosphor component 2, the nitride-based phosphor component 3, the matrix component 4, and the raw material powders thereof do not necessarily have a perfect sphere shape. In a case where these raw material powders are spherical particles, the garnet-based phosphor component 2, the nitride-based phosphor component 3, and the matrix component 4 that are contained in the composite ceramic 1 are also substantially spherical. However, in a case where these raw material powders are, for example, irregularly shaped angular particles, the garnet-based phosphor component 2, the nitride-based phosphor component 3, and the matrix component 4 that are contained in the composite ceramic 1 are also irregularly shaped angular particles. Further, depending on a sintering method, sintering sometimes changes the shape of the raw material powders due to grain growth of the raw material powders. In such a case where the component to be subjected to measurement is not a perfect sphere, "particle size" means a particle diameter based on the assumption that the component to be subjected to measurement is a perfect sphere having a volume identical to that of the component.

### (Sintering agent)

Further, the composite ceramic 1 may further contain a sintering agent. In a case where a raw material powder (first raw material powder) containing the raw material powder used as the raw material of the garnet-based phosphor component 2, the raw material powder used as the raw material of the nitride-based phosphor component 3, and the raw material powder used as the raw material of the matrix component 4 contains a sintering agent, the composite ceramic 1 also contains the sintering agent.

Examples of the sintering agent that is used in the composite ceramic 1 include at least one selected from the group consisting of Si₃N₄, SiO₂, CaO, MgO, ZnO, Y₂O₃, LiF, and AlF₃. Note, however, that MgO is excluded from the sintering agent in a case where the matrix component 4 is MgO. MgO can be used as the sintering agent in a case where the matrixcomponent is only Al₂O₃.

For this reason, in a case where the matrix component 4 is Al₂O₃, at least one type of sintering agent selected from the group consisting of Si₃N₄, SiO₂, CaO, MgO, ZnO, Y₂O₃, LiF, and AlF₃ is used. In contrast, in a case where the matrix component 4 contains at least MgO among MgO and Al₂O₃, at least one type of sintering agent selected from the group consisting of Si₃N₄, SiO₂, CaO, ZnO, Y₂O₃, LiF, and AlF₃ is used.

The first raw material powder that contains the sintering agent makes it possible to further reduce the sintering temperature, so that the composite ceramic 1 can be more easily produced. Further, this makes it possible to further reduce a risk of deterioration of performance of a phosphor.

Note that a content of the sintering agent in the first raw material powder and the composite ceramic 1 composed of the first raw material powder is preferably in a range of not less than 0.05 wt% and not more than 10 wt% in order to prevent deterioration of a phosphor property.

Further, the sintering agent that is contained per unit volume of the composite ceramic 1 has a number average particle size preferably in a range of not less than 0.01 µm and not more than 1 µm because it is easy to exhibit an effect as a sintering agent. Thus, the sintering agent is much finer and much smaller in amount as compared with the garnet-based phosphor component 2, the nitride-based phosphor component 3, and the matrix component 4, and is not illustrated.

### [Thickness of composite ceramic 1]

The composite ceramic 1 has a thickness that is not particularly limited and that is preferably, for example, in a range of not less than 10 µm and not more than 10 mm in a case where the composite ceramic is used for a phosphor element of a laser lighting device.

The composite ceramic 1 that has a thickness of not more than 10 mm is not too thick and has an excellent heat evacuation property. For example, a light collecting member described later can be used to control a beam pattern so as to prevent beams output from a phosphor element from being excessively spread. Further, since the composite ceramic 1 that has a thickness of not less than 10 µm is not too thin, it is possible to maintain an intensity for applying the composite ceramic 1 to a phosphor element.

Furthermore, the composite ceramic 1 that has a thickness in the above range allows excitation light emitted from an excitation light source such as a laser light source or the like to be transmitted therethrough.

### [Optical transmittance of composite ceramic 1]

The composite ceramic 1 desirably has a large light scattering property. In a case where a fluorescence or excitation light generated in composite ceramic is propagated in a transverse direction of a phosphor element, a beam emitted from the phosphor element is blurred.

However, the present embodiment makes it possible to obtain the composite ceramic 1 in which an in-line optical transmittance at a wavelength of 450 nm is not less than 0.01% and not more than 20% at a thickness of 100 µm of the composite ceramic 1. Note that the above in-line optical transmittance can be a value measured with use of a spectrophotometer including an integrating sphere or a photoreceiver having a laser light source and an aperture.

In a phosphor element in which composite ceramic having such an optical transmittance is used, light that is propagated inside the phosphor element in a transverse direction of a main surface of the phosphor element is reduced. This eliminates a beam diameter blur, so that the phosphor element is advantageous as a phosphor element for laser lighting.

### [Other physical properties of composite ceramic 1]

An object color of the composite ceramic 1 can be represented by an L*a*b* color system. L* is lightness, a* is chromaticity between red and green, and b* is chromaticity between yellow and blue. Further, chroma is represented by a square root of a sum of respective squares of a* and b*. The object color of the composite ceramic 1 is preferably represented in an appropriate range of the L*a*b* color system in order to enhance fluorescence power of the composite ceramic.

The object color in the L*a*b* color system can be measured with use of a known colorimeter. Further, the object color in the L*a*b* color system can be adjusted by annealing treatment described later.

The composite ceramic 1 has an internal quantum efficiency of preferably not less than 70%, and preferably not more than 95%.

### [Method for producing composite ceramic 1]

Next, the following description will discuss a method for producing the composite ceramic 1.

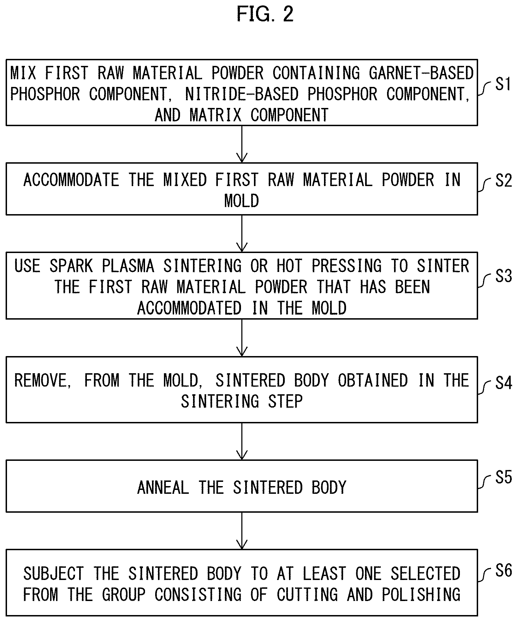

Fig. 2 is a flowchart showing an example of a method for producing the composite ceramic 1 in accordance with the present embodiment.

The method for producing the composite ceramic 1 in accordance with the present embodiment includes at least the following steps S1 to S4.

As illustrated in Fig. 2, in the method for producing the composite ceramic 1, first, the first raw material powder containing the garnet-based phosphor component 2, the nitride-based phosphor component 3, and the matrix component 4 is mixed (step S1, a mixing step).

Note that mixing of the first raw material powder refers to mixing of components contained in the first raw material powder. In this case, the first raw material powder may contain the sintering agent.

Dry blending is used for mixing of the first raw material powder. Any mixer may be used for the mixing provided that the mixer allows powder mixing by a dry method.

Next, the first raw material powder mixed in the mixing step is accommodated in a mold (step S2, a first raw material powder accommodating step).

Subsequently, the first raw material powder that has been accommodated in the mold is sintered (step S3, a sintering step). In this case, spark plasma sintering (SPS) or hot pressing is used to sinter the first raw material powder.

In SPS and hot pressing, each of which is a kind of solid compression sintering, the first raw material powder that has been accommodated in the mold is subjected to pressure application and press molding while being heated.

In SPS, while press molding is carried out by mechanical pressure application, pulsed electric current heating is carried out so as to sinter a molded body. In SPS, a molded body can be sintered by using, as a driving force for sintering, a combination of not only thermal and mechanical energy used in ordinary sintering but also, for example, electromagnetic energy caused by pulsed electric current, self-heating of a molded body, and discharge plasma energy generated between components.

As a result, in SPS, sintering can be carried out by increasing temperature to high temperature in a short period of time while carrying out mechanical pressure application. Thus, even such a ternary hardly sinterable molded body as described earlier can be sintered into a sintered body in which components contained in the molded body are substantially uniformly joined at a high density. Further, a sintering time is short in SPS. This makes it possible to prevent or reduce grain growth of each component.

In hot pressing, sintering is carried out in an atmosphere under pressure as in the case of SPS. In a case where hot pressing is used, a sintering time is longer as compared with SPS. However, hot pressing is superior in mass productivity.

Note that a high speed sintering method can also be used to sinter the first raw material powder.

The sintering temperature in the sintering step is preferably not less than 1,000°C and not more than 2,000°C. The sintering temperature that is not more than 2,000°C prevents the sintering temperature from being too high, and can prevent or reduce generation of an oxide and production of a new compound due to a solid solution formed by the components, so that properties of the components will not be lost.

Further, the sintering temperature that is not less than 1,000°C prevents the sintering temperature from being too low, and makes it easy for primary particles of the components to be joined. This allows the components to be mixed without forming a solid solution, and makes it easy to achieve a structure in which phases adjacent to each other are adhered together. For this reason, for example, the composite ceramic 1 that has sufficient processing strength as a bulk body and that outputs a suitable warm white fluorescence is easily obtained.

The sintering time in the sintering step is not particularly limited and may be, for example, any time that is not less than 5 minutes and not more than 20 hours.

Subsequently, a sintered body obtained in the sintering step is removed from the mold (step S4, a mold release step). This makes it possible to obtain the composite ceramic 1.

Note that the method for producing the composite ceramic 1 may further include, after the mold release step, an annealing step (step S5) of annealing the sintered body obtained in the sintering step.

An annealing temperature is, for example, preferably not less than 800°C and not more than 1,500°C. By annealing the sintered body at a temperature of not less than 800°C and not more than 1,500°C, it is possible to suitably prevent processing deformation of the composite ceramic 1 and control a defect in each phase.

Note that the annealing time is not particularly limited and may be, for example, any time that is not less than 5 minutes and not more than 20 hours.

Note that annealing is preferably carried out in a reducing atmosphere such as an N₂ atmosphere or an H₂ and N₂ atmosphere (e.g., an ammonia-containing gas).

Note that a heat treatment step such as annealing treatment may be carried out in a reducing atmosphere or an inert gas atmosphere during the production process. The heat treatment step is effective in order to express a better object color of the composite ceramic 1, and may be carried out at any time during the production process provided that such an effect can be obtained. The heat treatment step is preferably the above annealing treatment, and a treatment temperature in the heat treatment step may be identical to the above annealing temperature. Alternatively, unlike the annealing treatment, the heat treatment step may be carried out between two appropriate steps among the above-described steps.

Note that the method for producing the composite ceramic 1 may further include a cutting/polishing step (step S6) of subjecting the sintered body to at least one selected from the group consisting of cutting and polishing.

The composite ceramic 1 is not particularly limited in size, and the sintered body that has been removed from the mold in the mold release step can be used as it is as the composite ceramic 1. However, in order that the composite ceramic 1 has a predetermined size, a resulting sintered body may be subjected to at least one selected from the group consisting of cutting and polishing, as described earlier.

A method for cutting the sintered body is not particularly limited. For example, a wire saw or the like may be used to process the sintered body by slicing (cut the sintered body). Cutting the sintered body makes it possible to obtain the composite ceramic 1 that has a small thickness. Of course, the composite ceramic 1 that has a small thickness may be produced, without cutting, by using a mold having a small thickness, or adjusting an amount of the first raw material powder that is accommodated in the mold.

Further, a method for polishing the sintered body is not particularly limited. For example, a surface of the sintered body may be polished by rotating a polishing part while discharging a polishing liquid from a discharging section of a polishing device. This makes it possible to smooth the surface while causing the sintered body to have a smaller thickness. Thus, by carrying out polishing, it is possible to obtain the composite ceramic 1 that has a small thickness and that has a smooth surface.

In Fig. 2, both the annealing step and the cutting/polishing step are carried out. Note, however, that the present embodiment is not limited to this. Only one of the annealing step and the cutting/polishing step may be carried out. Further, the annealing step may be carried out after the cutting/polishing step.

### [Embodiment 2]

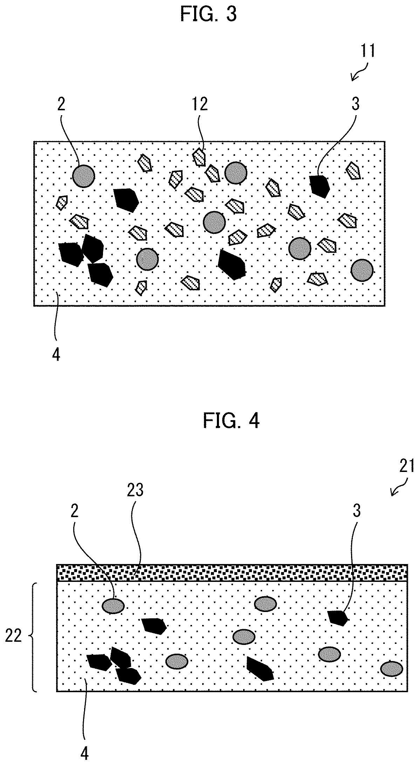

Fig. 3 is a cross-sectional view illustrating an example of a structure of composite ceramic 11 in accordance with the present embodiment.

As illustrated in Fig. 3, the composite ceramic 11 in accordance with the present embodiment has a configuration similar to that of the composite ceramic 1 in accordance with Embodiment 1 except that the composite ceramic 11 further contains a light scattering component 12.

The light scattering component 12 may be a light scatterer having a refractive index that is higher by not less than 0.21 than a refractive index of a matrix component 4.

In a case where the composite ceramic thus further contains the light scattering component 12 in addition to a garnet-based phosphor component 2, a nitride-based phosphor component 3, and the matrix component 4, a content of a total of the matrix component 4 and the light scattering component 12 is desirably not less than 31 wt% and not more than 95 wt% of all components of the composite ceramic from the viewpoint described later.

A case where composite ceramic conventionally known in the art is used, for example, in a phosphor element of a laser lighting device has the following problem: a fluorescence or excitation light generated in the composite ceramic is propagated in a transverse direction of the phosphor element, so that a beam emitted from the phosphor element is blurred.

However, the present embodiment makes it possible not only to bring about the effect described in Embodiment 1 but also to provide the composite ceramic 11 that has an excellent light scattering property and that makes it possible to efficiently externally extract a generated fluorescence and generated excitation light.

Examples of the light scattering component 12 include at least one selected from the group consisting of AlN, cBN, SiC, an AlN-SiC solid solution, and diamond. Such a light scattering component is particularly excellent in light scattering property and can be suitably used as the light scattering component 12.

An upper limit of a refractive index difference between the matrix component 4 and the light scattering component 12 used in the present embodiment is not particularly limited. However, among MgO and Al₂O₃ that are used for the matrix component 4, Al₂O₃, which has a lower refractive index, has a refractive index of 1.63. In a case where any of the above-listed light scattering components is used as the light scattering component 12, SiC, which has a highest refractive index, has a refractive index of approximately 2.72. Thus, in a case where any of the above-listed light scattering components is used as the light scattering component 12, the refractive index difference between the matrix component 4 and the light scattering component 12 is 1.1 at maximum.

Further, the light scattering component 12 contained per unit volume of the composite ceramic 1 has a number average particle size of preferably not less than 0.25 µm and not more than 40 µm, and more desirably not less than 0.5 µm and not more than 20 µm. Note that the number average particle size of the light scattering component 12 may be a value measured by a SEM, and the number average particle size of the light scattering component 12 may have specifications described in an invoice or a catalog. The light scattering component 12 that has a number average particle size in the above range results in greatest light scattering due to Mie scattering.

The light scattering component 12 that has a number average particle size in the above range makes it possible to obtain a full light scattering effect.

As in the case of the garnet-based phosphor component 2, the nitride-based phosphor component 3, and the matrix component 4, in a case where a first raw material powder contains a raw material powder serving as a raw material of the light scattering component 12, the composite ceramic 11 contains the light scattering component 12. Thus, the composite ceramic 11 can be produced by mixing, in the mixing step (step S1), the first raw material powder that further contains the raw material powder serving as a raw material of the light scattering component 12.

Though not illustrated, it is a matter of course that the composite ceramic 11 may also contain the sintering agent.

### [Embodiment 3]

Fig. 4 is a cross-sectional view illustrating an example of a structure of composite ceramic 21 in accordance with the present embodiment.

As illustrated in Fig. 4, the composite ceramic 21 in accordance with the present embodiment has a laminated structure including a first ceramic layer 22 and a second ceramic layer 23. The first ceramic layer 22 illustrated in Fig. 4 has a configuration similar to that of the composite ceramic 1 in accordance with Embodiment 1.

The second ceramic layer 23 is composed of at least one selected from the group consisting of MgO and Al₂O₃, and is joined to one main surface of the first ceramic layer 22.

Conventionally, composite ceramic has not been achieved that contains a reddish phosphor, that can withstand laser excitation, and that is for high power excitation. As described earlier, Embodiment 1 makes it possible to provide the composite ceramic 1 for laser lighting, the composite ceramic 1 containing a reddish phosphor and being capable of being used for laser lighting using laser excitation. Thus, the first ceramic layer 22 alone can be used as composite ceramic for laser lighting.

However, since the second ceramic layer 23 that has the above-described configuration is joined to the first ceramic layer 22 as described above, burning of a surface of composite ceramic can be prevented or reduced even in a case where laser light is used to strongly excite the composite ceramic. Thus, the present embodiment makes it possible to provide composite ceramic 12 that makes it possible to prevent or reduce such surface deterioration caused by burning.

The first ceramic layer 22 has a thickness that is not particularly limited and that can be set to, for example, a thickness similar to that of the composite ceramic 1 in accordance with Embodiment 1.

The second ceramic layer 23 has a thickness that is not particularly limited. From the viewpoint that the second ceramic layer 23 contains no fluorescence component and does not contribute to fluorescence emission and from the viewpoint of a heat evacuation property, the second ceramic layer 23 is desirably provided so as to have a smaller thickness than the first ceramic layer 22.

Thus, the second ceramic layer 23 desirably has a thickness of, for example, not more than 30 µm. Further, in order to sufficiently obtain an effect of preventing or reducing burning of the surface of the composite ceramic, the second ceramic layer 23 desirably has a thickness of, for example, not less than 1 µm.

A method for producing the composite ceramic 21 is identical to the method for producing the composite ceramic 1 in accordance with Embodiment 1 except for the following points. The method for producing the composite ceramic 21 further includes a second raw material powder accommodating step of accommodating, in the mold, a second raw material powder that is less than the first raw material powder and that is composed of at least one selected from the group consisting of MgO and Al₂O₃. In the sintering step (step S3), the first raw material powder and the second raw material powder that have been accommodated in the mold are sintered. This forms a sintered body obtained by joining a sintered body of the first raw material powder and a sintered body of the second raw material powder which sintered body is thinner than the first raw material powder. This makes it possible to produce the composite ceramic 21.

Note that the second raw material powder accommodating step may be carried out after the first raw material powder accommodating step (step S2) (i.e., between steps S2 and S3), or may be carried out before the first raw material powder accommodating step (step S2) (i.e., between steps S1 and S2).

However, in view of an influence of stress or raw material shrinkage, the second raw material powder accommodating step is desirably carried out twice before the first raw material powder accommodating step and after the first raw material powder accommodating step. In a case where the second raw material powder accommodating step is carried out twice before and after the first raw material powder accommodating step, a sintered body in which second ceramic layers 23 are provided with the first ceramic layer 22 sandwiched therebetween is obtained after the mold release step (step S4). That is, a sintered body having a three-layer structure in which the second ceramic layers 23 are provided on both respective main surfaces, i.e., a front main surface and a back main surface, respectively, of the first ceramic layer 22 is obtained. In this case, after the mold release step, the second ceramic layer 23 on one main surface of the first ceramic layer 22 may be removed by, for example, grinding or polishing. The above-described removal may be carried out in the cutting/polishing step.

Further, by processing the sintered body by slicing (cutting the sintered body) instead of removing the second ceramic layer 23 on one main surface of the first ceramic layer 22, a plurality of pieces of the composite ceramic 21 in which the second ceramic layer 23 is provided on one main surface of the first ceramic layer 22 may be produced.

Further, also in the present embodiment, after the mold release step (step S4) or after the cutting/polishing step, the annealing step (step S5) may be carried out if necessary.

Though not illustrated, the composite ceramic 21 may also contain the sintering agent.

Further, though Fig. 4 illustrates, as an example, a case where the first ceramic layer 22 has a configuration similar to that of the composite ceramic 1 in accordance with Embodiment 1, the present embodiment is not limited to this. The first ceramic layer 22 may have a configuration similar to that of the composite ceramic 11 in accordance with Embodiment 2.

### [Embodiment 4]

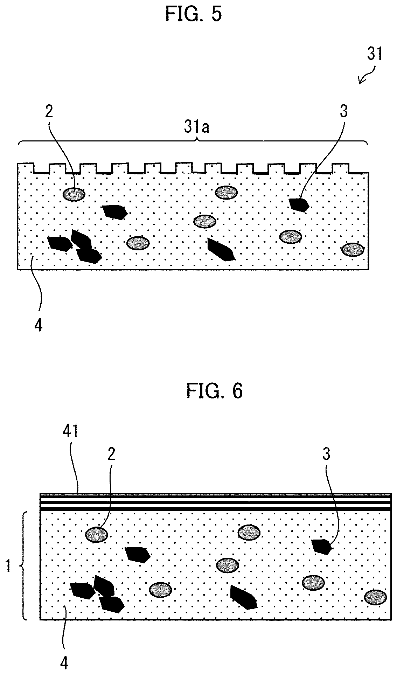

Fig. 5 is a cross-sectional view illustrating an example of a structure of composite ceramic 31 in accordance with the present embodiment.

As illustrated in Fig. 5, the composite ceramic 31 in accordance with the present embodiment has, for example, a configuration similar to that of the composite ceramic 1 in accordance with Embodiment 1 except that unevenness 31a is provided on one main surface.

Thus, a method for producing the composite ceramic 21 is identical to the method for producing the composite ceramic 1 in accordance with Embodiment 1, except that the method further includes an unevenness forming step of forming the unevenness 31a on one main surface of a sintered body.

Fig. 5 illustrates, as an example, a case where the unevenness 31a is diced grooves. However, the present embodiment is not limited to this. In the unevenness forming step, for example, the unevenness 31a may be formed by a dicer or laser processing, or the unevenness 31a may be formed by roughening the main surface by polishing.

In accordance with the present embodiment, since the unevenness 31a is provided on one main surface as described above, it is possible to provide the composite ceramic 31 that makes it possible to scatter and efficiently extract an internally generated fluorescence or excitation light.

Note that a height of the unevenness 31a on the surface is not particularly limited provided that an internally generated fluorescence or excitation light can be scattered as described above.

Fig. 5 illustrates, as an example, a case where the composite ceramic 31 has a configuration in which the unevenness 31a is provided on one main surface of the composite ceramic 1. However, the present embodiment is not limited to this. The composite ceramic 31 in accordance with the present embodiment may have a configuration in which the unevenness 31a is provided on one main surface of the composite ceramic 11. Further, the composite ceramic 31 in accordance with the present embodiment may have a configuration in which the unevenness 31a is provided on a main surface of the second ceramic layer 23 of the composite ceramic 21 which main surface is opposite from the first ceramic layer 22.

### [Embodiment 5]

Fig. 6 is a view illustrating composite ceramic 1 having one main surface on which an anti-reflection (AR) coating film 41 is provided, according to the present example embodiment.

The AR coating film 41 is provided on the main surface of the composite ceramic 1 as illustrated in Fig. 6. With this, in a case where the composite ceramic 1 is used as a phosphor element for laser lighting, it is possible to prevent excitation light from being reflected in a surface irradiated with the excitation light. This makes it possible to reduce an optical loss caused in a case where excitation light is absorbed by the composite ceramic 1. Further, it is possible to effectively extract a fluorescence or scattered light generated in a phosphor of the composite ceramic 1.

Examples of a material of the AR coating film 41 include dielectric multilayer films made of, for example, SiO₂, TiO₂, and Si₃N₄. These can be formed by, for example, a film forming method such as ion beam deposition or spattering.

Note that composite ceramic which is thus provided with the AR coating film 41 is hereinafter sometimes referred to as AR coating film-attached composite ceramic. Thus, AR coating film-attached composite ceramic to which an AR coating thus has been applied is suitably used for, for example, a phosphor element for laser lighting.

In order to be used for laser lighting, the phosphor element has an excitation light power tolerance (element reliability) of preferably not less than 0.5 kW/cm², and more preferably not less than 3 kW/cm². The phosphor element preferably has higher excitation light power tolerance. However, an upper limit of the excitation light power tolerance may be set from the viewpoint that a sufficient effect is obtained in a case where the phosphor element is used for laser lighting. The element reliability of the phosphor element can be determined and adjusted as in the case of that of the composite ceramic described earlier.

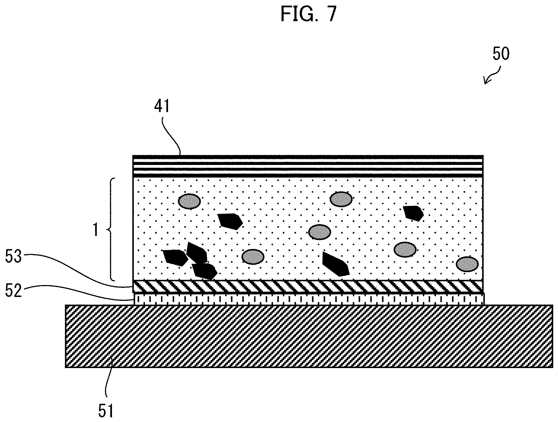

Fig. 7 is a cross-sectional view illustrating an example of a phosphor element 50 in accordance with the present embodiment.

The phosphor element 50 illustrated in Fig. 7 includes the composite ceramic 1 illustrated in Fig. 6 and provided with the AR coating film 41, a base material 51, an adhesive layer 52, and a mirror 53.

The base material 51 is a supporting member that supports the composite ceramic 1. The composite ceramic 1 is fixed to the base material 51.

The base material 51 is not particularly limited provided that the composite ceramic 1 can be fixed. Examples of the base material 51 include metals such as SUS, Al, Cu, Mo, Ag, and W. The base material 51 that is made of any of these metals makes it possible to suitably reflect excitation light emitted from an excitation light source such as a laser light source.

Further, since Al, Cu, Mo, Ag, W, and the like have excellent thermal conductivity, it is possible to obtain the phosphor element 50 that has excellent thermal conductivity.

Note, however, that the base material 51 is not limited to such a non-transmissive base material. The base material 51 may be, for example, a transmissive base material represented by Al₂O₃, such as single-crystal sapphire or polycrystalline alumina.

As illustrated in Fig. 7, the composite ceramic 1 is fixed to the base material 51 so that the AR coating film 41 is located on a main surface of the composite ceramic 1 which main surface is opposite from the base material 51.

The mirror 53 is a reflector (mirror body) that reflects light transmitted through the composite ceramic 1. The mirror 53 is provided on the base material 51 side main surface of the composite ceramic 1. In the following description, the base material 51 side main surface of the composite ceramic 1 is sometimes referred to as "back main surface", and the main surface of the composite ceramic 1 which main surface is opposite from the base material 51 is sometimes referred to as "front main surface".

The mirror 53 is provided on the back main surface side of the composite ceramic 1, and the AR coating film 41 is provided on the front main surface side of the composite ceramic.

The mirror 53 that is thus provided on the back main surface of the composite ceramic 1 allows light transmitted through the composite ceramic 1 to be reflected by the mirror 53 in a case where excitation light is emitted to the front main surface side of the composite ceramic 1. This allows light to be used with higher efficiency.

The mirror 53 is not particularly limited provided that the mirror 53 can reflect light transmitted through the composite ceramic 1. Examples of the mirror 53 that is suitably used include a silver-based mirror including silver or a silver alloy that is a specular reflective material.

The adhesive layer 52 is a layer for adhering the base material 51 to the composite ceramic 1 provided with the mirror 53.

An adhesive material used in the adhesive layer 52 is not particularly limited provided that the adhesive material allows the base material 51 to be adhered to the composite ceramic 1 provided with the mirror 53. Examples of the adhesive material include an inorganic silver-based or silver alloy-based adhesive.

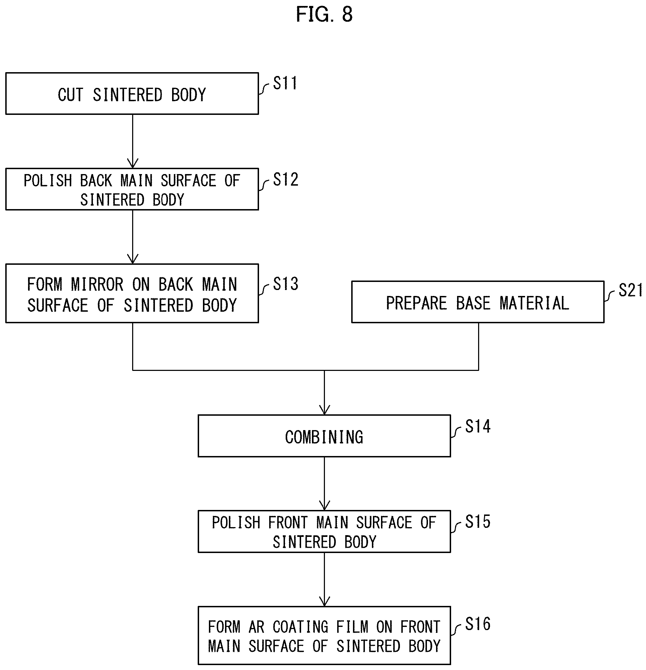

Fig. 8 is a flowchart showing an example of a method for producing the phosphor element 50 illustrated in Fig. 7.

As illustrated in Fig. 8, in the method for producing the phosphor element 50, for example, as the cutting/polishing step of step S6, a cutting step of cutting a sintered body (step S11) and a back main surface polishing step of polishing a back main surface of the sintered body (step S12) are carried out. Note, however, that the cutting/polishing step is not essential as described earlier.

Next, the mirror 53 is formed on the back main surface of the sintered body (step S13, a mirror forming step). This forms mirror-attached composite ceramic obtained by joining the mirror 53 to one main surface of the composite ceramic 1.

Meanwhile, the base material 51 is prepared (step S21, a base material preparing step).

Subsequently, the base material 51 and the mirror-attached composite ceramic obtained in step S13 are combined by the adhesive material constituting the adhesive layer 52 (step S14, a combining step).

Then, a front main surface of the sintered body is polished (step S15, a front main surface polishing step). Thereafter, the AR coating film 41 is formed on the front main surface of the sintered body (step S16, an AR coating film forming step). Thus, as illustrated in Fig. 8, the phosphor element 50 can be produced.

In Fig. 8, the front main surface polishing step is carried out after the combining step. Note, however, that the present embodiment is not limited to this. The front main surface polishing step may be carried out before the combining step.

Further, the phosphor element 50 in accordance with the present embodiment is not limited to a structure illustrated in Fig. 7. The phosphor element 50 need only include, for example, the composite ceramic 1 and the base material 51 for fixing the composite ceramic 1.

Alternatively, the phosphor element 50 may include composite ceramic 11, composite ceramic 21, or composite ceramic 31 instead of the composite ceramic 1. Alternatively, composite ceramic obtained by combining the composite ceramic 11, the composite ceramic 21, and the composite ceramic 31 may be used.

### [Embodiment 6]

As described earlier, composite ceramic can be suitably used for a phosphor element for laser lighting (in other words, a phosphor element of a laser lighting device).

A laser lighting device in accordance with the present example embodiment includes: a phosphor element; a laser light source that emits excitation light to composite ceramic of the phosphor element; and a light collecting member (first light collecting member) that collects light output from the composite ceramic of the phosphor element.

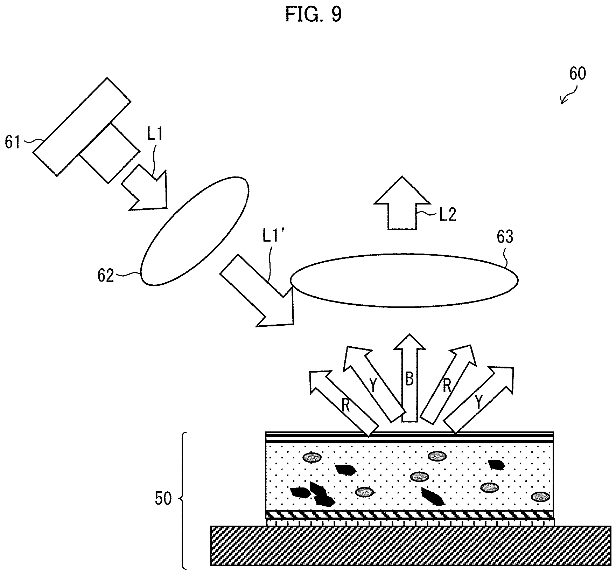

Fig. 9 is a cross-sectional view illustrating an example of a laser lighting device 60 in accordance with the present embodiment.

The laser lighting device 60 illustrated in Fig. 9 includes, for example, the phosphor element 50 illustrated in Fig. 8. Further, the laser lighting device 60 illustrated in Fig. 9 includes a laser light source 61 as the laser light source and includes a lens 63 as the first light collecting member. Further, the laser lighting device 60 illustrated in Fig. 9 includes a lens 62 as a second light collecting member that collects excitation light output from the laser light source 61.

The laser light source 61 emits excitation light L1 as first light to composite ceramic 1 of the phosphor element 50 via the lens 62. Specifically, the excitation light L1 output from the laser light source 61 is collected by the lens 62 so as to be emitted as the collected excitation light L1 (hereafter referred to as "excitation light L1'") from the lens 62 to the composite ceramic 1 of the phosphor element 50.

The composite ceramic 1 absorbs at least part of the excitation light L1' and outputs second light containing light of a wavelength different from that of the excitation light L1' (i.e., light of a wavelength different from that of the excitation light L1). For example, a garnet-based phosphor component 2 described earlier emits, for example, a yellowish fluorescence Y by blue light, which is the excitation light L1, and a nitride-based phosphor component 3 emits a reddish fluorescence R by the blue light, which is the excitation light L1. Further, these phosphors each scatter blue light that is included in the blue light, which is the excitation light L1, and that has not contributed to excitation, and transmit the scattered blue light as scattered blue light B. With this, in a case where the composite ceramic 1 of the phosphor element 50 is irradiated with the blue excitation light L1, the scattered blue light B, the yellowish fluorescence Y, and the reddish fluorescence R are output from the phosphor element 50 as illustrated in Fig. 9. These beams of light (the second light) output from the phosphor element 50 (specifically, the composite ceramic 1 of the phosphor element 50) are collected light by the lens 63. In a case where these beams of light (i.e., the scattered blue light B, the yellowish fluorescence Y, and the reddish fluorescence R) output from the phosphor element 50 are mixed, reddish warm white light is output as a beam L2 via the lens 63.

Note that the phosphor element 50 need only include composite ceramic in accordance with the present disclosure and a base material 51 as described in Embodiment 5. The composite ceramic may be the composite ceramic described in any of Embodiments 1 to 4, or may be composite ceramic composed of a combination thereof.

The laser light source 61 is not particularly limited provided that the laser light source 61 can emit the emit excitation light L1. Examples of the laser light source 61 include a blue semiconductor laser diode (LD) that emits blue light as the excitation light L1 as described earlier.

In a case where the phosphor element 50 includes the mirror 53 as described earlier, or in a case here the base material 51 is a non-transmissive base material that does not allow the excitation light L1 to pass therethrough, the phosphor element 50 is disposed so that the composite ceramic 1 is located on the outgoing light side of the laser light source 61.

In contrast, in a case where the base material 51 is a transmissive base material, and the phosphor element 50 does not include a reflector such as the mirror 53 on the back main surface of the composite ceramic 1, the excitation light L1 is emitted from a surface of the base material 51 which surface is opposite from a surface of the base material 51 to which surface the composite ceramic 1 is fixed. Also in this case, the second light is output from the front main surface side of the composite ceramic 1.

Fig. 9 illustrates, as an example, a case where both the first light collecting member and the second light collecting member are lenses. Note, however, that these light collecting members may be lenses or may be mirrors.

### [Embodiment 7: Another embodiment of composite ceramic]

Composite ceramic of an embodiment of the present invention may contain the foregoing La₃Si₆N₁₁-based phosphor component (nitride phosphor (C)) instead of the garnet-based phosphor component provided that an effect of the present invention is obtained. In this case, "nitride-based phosphor component" can be selected from nitride-based phosphor components other than the La₃Si₆N₁₁-based phosphor component.

That is, composite ceramic of Embodiment 7 may be composite ceramic composed of a sintered body containing an La₃Si₆N₁₁-based phosphor component, a nitride-based phosphor component other than the La₃Si₆N₁₁-based phosphor component, and a matrix component, the matrix component being at least one selected from the group consisting of MgO and Al₂O₃, the matrix component having a content in a range of not less than 31 wt% and not more than 95 wt% of all components of the composite ceramic, and the matrix component being sintered so as to surround the La₃Si₆N₁₁-based phosphor component and the nitride-based phosphor component.

The composite ceramic of Embodiment 7 can be configured, produced, and used as in the case of the composite ceramic of the foregoing embodiments except that the foregoing La₃Si₆N₁₁-based phosphor component is used instead of the garnet-based phosphor component. Since the La₃Si₆N₁₁-based phosphor component is used instead of the garnet-based phosphor component in the composite ceramic of Embodiment 7, the composite ceramic of Embodiment 7 is advantageous in order to more easily produce composite ceramic.

### [Embodiment 8: Still another embodiment of composite ceramic]

Composite ceramic of an embodiment of the present invention may substantially contain only a La₃Si₆N₁₁-based phosphor component (nitride phosphor (C)) as a phosphor component provided that an effect of the present invention is obtained. That is, composite ceramic of Embodiment 8 may be composite ceramic composed of a sintered body substantially containing only an La₃Si₆N₁₁-based phosphor component and a matrix component, the matrix component being at least one type of component selected from the group consisting of Al₂O₃, a mixture of Al₂O₃ and MgO, and MgAlO₂, the matrix component having a content in a range of not less than 31 wt% and not more than 95 wt% of all components of the composite ceramic, and the matrix component being sintered so as to surround the La₃Si₆N₁₁-based phosphor component.

In the present embodiment, the content of the matrix component and a content of the nitride phosphor (C) each can be set as appropriate in order to provide composite ceramic that is for low color temperature and that has high fluorescence power and high excitation light power tolerance.

The composite ceramic of Embodiment 8 can be configured, produced, and used as in the case of the composite ceramic of the foregoing embodiments except that the La₃Si₆N₁₁-based phosphor component is used instead of the garnet-based phosphor component and the nitride-based phosphor component. Since the phosphor component is composed substantially only of the La₃Si₆N₁₁-based phosphor component in the composite ceramic of Embodiment 8, the composite ceramic of Embodiment 8 is advantageous in order to more easily produce composite ceramic.

Aspects of the present invention can also be expressed as follows:
A first aspect of the present invention is composite ceramic composed of a sintered body containing a garnet-based phosphor component, a nitride-based phosphor component, and a matrix component, the matrix component being at least one selected from the group consisting of MgO and Al₂O₃, the matrix component having a content in a range of not less than 31 wt% and not more than 95 wt% of all components of the composite ceramic, and the matrix component being sintered so as to surround the garnet-based phosphor component and the nitride-based phosphor component.
A second aspect of the present invention is configured such that, in the first aspect, the matrix component that is contained per unit volume of the composite ceramic has a number average particle size in a range of not less than 0.01 µm and not more than 10 µm.
A third aspect of the present invention is configured such that, in the second aspect, the garnet-based phosphor component contains at least one selected from the group consisting of (Ce, Y)₃Al₅O₁₂, (Ce, Lu)₃Al₅O₁₂, (Ce, Lu, Y)₃Al₅O₁₂, and (Ce, Lu, Y)₃(Al, Ga)₅O₁₂.
A fourth aspect of the present invention is configured such that, in any one of the first to third aspects, the nitride-based phosphor component contains at least one selected from the group consisting of Sr₂Si₅N₈, (Sr, Ba)₂Si₅N₈, and (Ca, Sr, Ba)₂Si₅N₈, the at least one each having been activated by at least one element selected from the group consisting of Eu and Ce.
A fifth aspect of the present invention is configured such that, in the fourth aspect, at least one selected from the group consisting of part of Si and part of N is substituted, Si is substituted with Al in a case where Si is partially substituted, and N is substituted with O in a case where N is partially substituted.
A sixth aspect of the present invention is configured such that, in any one of the first to fifth aspects, the nitride-based phosphor component contains at least one selected from the group consisting of CaAlSiN₃ and (Ca, Sr)AlSiN₃, the at least one each having been activated by at least one element selected from the group consisting of Eu and Ce.
A seventh aspect of the present invention is configured such that, in any one of the first to sixth aspects, in a triangular diagram where a content of a total of the nitride-based phosphor component, the matrix component, and the garnet-based phosphor component is 100 wt%, respective contents of the nitride-based phosphor component, the matrix component, and the garnet-based phosphor component are in a range surrounded by straight lines connecting:
   a point A at which the content of the nitride-based phosphor component is 59 wt%, the content of the matrix component is 31 wt%, and the content of the garnet-based phosphor component is 10 wt%;
   a point B at which the content of the nitride-based phosphor component is 8 wt%, the content of the matrix component is 90 wt%, and the content of the garnet-based phosphor component is 2 wt%;
   a point C at which the content of the nitride-based phosphor component is 2 wt%, the content of the matrix component is 90 wt%, and the content of the garnet-based phosphor component is 8 wt%; and
   a point D at which the content of the nitride-based phosphor component is 10 wt%, the content of the matrix component is 31 wt%, and the content of the garnet-based phosphor component is 59 wt%.
An eighth aspect of the present invention is configured such that, in any one of the first to seventh aspects, the composite ceramic further contains a light scattering component having a refractive index that is higher by not less than 0.21 than a refractive index of the matrix component, and a content of a total of the matrix component and the light scattering component is not less than 31 wt% and not more than 95 wt% of all the components of the composite ceramic.
A ninth aspect of the present invention is configured such that, in the eighth aspect, the light scattering component is at least one selected from the group consisting of AlN, cBN, SiC, an AlN-SiC solid solution, and diamond.
A tenth aspect of the present invention is configured such that, in the eighth or ninth aspect, the light scattering component that is contained per unit volume of the composite ceramic has a number average particle size of not less than 0.25 µm and not more than 40 µm.
An eleventh aspect of the present invention is configured such that, in any one of the first to tenth aspects, an in-line optical transmittance at a wavelength of 450 nm is not less than 0.01% and not more than 20% at a thickness of 100 µm of the composite ceramic.
A twelfth aspect of the present invention is configured such that, in any one of the first to eleventh aspects, the composite ceramic further contains a sintering agent,
   in a case where the matrix component is Al₂O₃, the sintering agent is at least one selected from the group consisting of Si₃N₄, SiO₂, CaO, MgO, ZnO, and Y₂O₃, and
   in a case where the matrix component contains at least MgO among MgO and Al₂O₃, the sintering agent is at least one selected from the group consisting of Si₃N₄, SiO₂, CaO, ZnO, and Y₂O₃.
A thirteenth aspect of the present invention is configured such that, in any one of the first to twelfth aspects, the composite ceramic has a laminated structure in which a layer composed of at least one selected from the group consisting of MgO and Al₂O₃ is joined to one main surface of the composite ceramic.
A fourteenth aspect of the present invention is configured such that, in any one of the first to thirteenth aspects, the composite ceramic has an excitation light power tolerance of not less than 0.5 kW/cm².
A fifteenth aspect of the present invention is configured such that, in any one of the first to fourteenth aspects, the composite ceramic has one main surface that is provided with unevenness.
A sixteenth aspect of the present invention is a phosphor element including: composite ceramic of any one of the first to fifteenth aspects; and a base material for fixing the composite ceramic.
A seventeenth aspect of the present invention is a laser lighting device including: a phosphor element of the sixteenth aspect; a laser light source that emits excitation light to the composite ceramic of the phosphor element; and a light collecting member that collects light output from the composite ceramic of the phosphor element.
An eighteenth aspect of the present invention is a method for producing composite ceramic, including: a mixing step of mixing a first raw material powder containing a garnet-based phosphor component, a nitride-based phosphor component, and a matrix component; a first raw material powder accommodating step of accommodating the mixed first raw material powder in a mold; a sintering step of using spark plasma sintering or hot pressing to sinter the first raw material powder that has been accommodated in the mold; and a mold release step of removing, from the mold, a sintered body obtained in the sintering step.
A nineteenth aspect of the present invention is configured, in the eighteenth aspect, to further include a second raw material powder accommodating step of accommodating, in the mold, a second raw material powder that is less than the first raw material powder and that is composed of at least one selected from the group consisting of MgO and Al₂O₃, in the sintering step, by sintering the first raw material powder and the second raw material powder that have been accommodated in the mold, a sintered body being formed in which a sintered body of the first raw material powder and a sintered body of the second raw material powder which sintered body is thinner than the first raw material powder are joined.
A twentieth aspect of the present invention is configured, in the eighteenth or nineteenth aspect, to further include a cutting/polishing step of subjecting the sintered body to at least one selected from the group consisting of cutting and polishing.
A twenty-first aspect of the present invention is configured, in any one of the eighteenth to twentieth aspects, to further include an unevenness forming step of forming unevenness on one main surface of the sintered body.
A twenty-second aspect of the present invention is configured such that, in the twenty-first aspect, the unevenness is formed by a dicer, laser processing, or polishing in the unevenness forming step.
A twenty-third aspect of the present invention is configured such that, in the first aspect, the nitride-based phosphor component contains at least one selected from the group consisting of (La)₃Si₆N₁₁, (La, Y)₃Si₆N₁₁, and (La, Y, Lu)₃Si₆N₁₁, the at least one each having been activated by at least one element selected from the group consisting of Eu and Ce.
A twenty-fourth aspect of the present invention is configured such that, in the fourteenth aspect, the composite ceramic has an excitation light power tolerance of not less than 1 kW/cm².
A twenty-sixth aspect of the present invention is configured such that, in any one of the first to fifteenth aspects and twenty-third to twenty-fifth aspects, the composite ceramic has an internal quantum efficiency of not less than 70% and not more than 95%.
A thirtieth aspect of the present invention is configured such that, in the sixteenth aspect, the composite ceramic has an excitation light power tolerance of not less than 0.5 kW/cm².
A thirty-first aspect of the present invention is configured such that, in the sixteenth aspect, the composite ceramic of the phosphor element as set forth in claim 16 has an excitation light power tolerance of not less than 3 kW/cm².
A thirty-second aspect of the present invention is configured, in any one of the eighteenth to twenty-second aspects, to further include a step of heat-treating the sintered body in a reducing atmosphere or an inert gas atmosphere during the production process.
A thirty-third aspect of the present invention is configured such that, in the thirty-second aspect, the step of heat-treating is a step of heat-treating the sintered body in an ammonia-containing gas.
A thirty-fourth aspect of the present invention is composite ceramic composed of a sintered body containing an La₃Si₆N₁₁-based phosphor component, a nitride-based phosphor component other than the La₃Si₆N₁₁-based phosphor component, and a matrix component, the matrix component being at least one selected from the group consisting of MgO and Al₂O₃, the matrix component having a content in a range of not less than 31 wt% and not more than 95 wt% of all components of the composite ceramic, and the matrix component being sintered so as to surround the La₃Si₆N₁₁-based phosphor component and the nitride-based phosphor component. The thirty-fourth aspect can further include a feature of any one of the foregoing second to fifteenth aspects and twenty-third to twenty-ninth aspects provided that an effect of the thirty-fourth aspect is obtained.
A thirty-fifth aspect of the present invention is composite ceramic composed of a sintered body substantially containing only an La₃Si₆N₁₁-based phosphor component and a matrix component, the matrix component being at least one type of component selected from the group consisting of Al₂O₃, a mixture of Al₂O₃ and MgO, and MgAlO₂, the matrix component having a content in a range of not less than 31 wt% and not more than 95 wt% of all components of the composite ceramic, and the matrix component being sintered so as to surround the La₃Si₆N₁₁-based phosphor component. The thirty-fifth aspect can further include a feature of any one of the foregoing second to fifteenth aspects and twenty-third to twenty-ninth aspects provided that an effect of the thirty-fifth aspect is obtained.

### [Examples]

The following description will specifically discuss the composite ceramic in accordance with the present disclosure with reference to by Examples and Comparative Examples. However, the composite ceramic in accordance with the present disclosure is not limited to these Examples. In the following Examples and Comparative Examples, YAG activated by 2 mol% Ce and having a number average particle size of 15 µm was used for YAG serving as a raw material powder. Further, Sr₂Si₅N₈ activated by 2 mol% Eu and having a number average particle size of 13 µm (including partially agglomerated powder) was used for Sr₂Si₅N₈ serving as a raw material powder. Al₂O₃ having a number average particle size of 0.1 µm was used for Al₂O₃ serving as a raw material powder. MgO having a number average particle size of 0.05 µm was used for MgO serving as a raw material powder. AlN having a number average particle size of 1 µm was used for AlN serving as a raw material powder.

### [Example 1]

As illustrated in Fig. 10, in Example 1, the raw material powders were mixed so that YAG, which is a garnet-based phosphor component, Sr₂Si₅N₈, which is a nitride-based phosphor component, and Al₂O₃, which is a matrix component, had respective contents of 25 wt%, 25 wt%, and 50 wt%.

Subsequently, the raw material powders were filled in a mold, and SPS was used to sinter the raw material powders in a nitrogen atmosphere at 1,350°C for 3 minutes so as to produce composite ceramic.

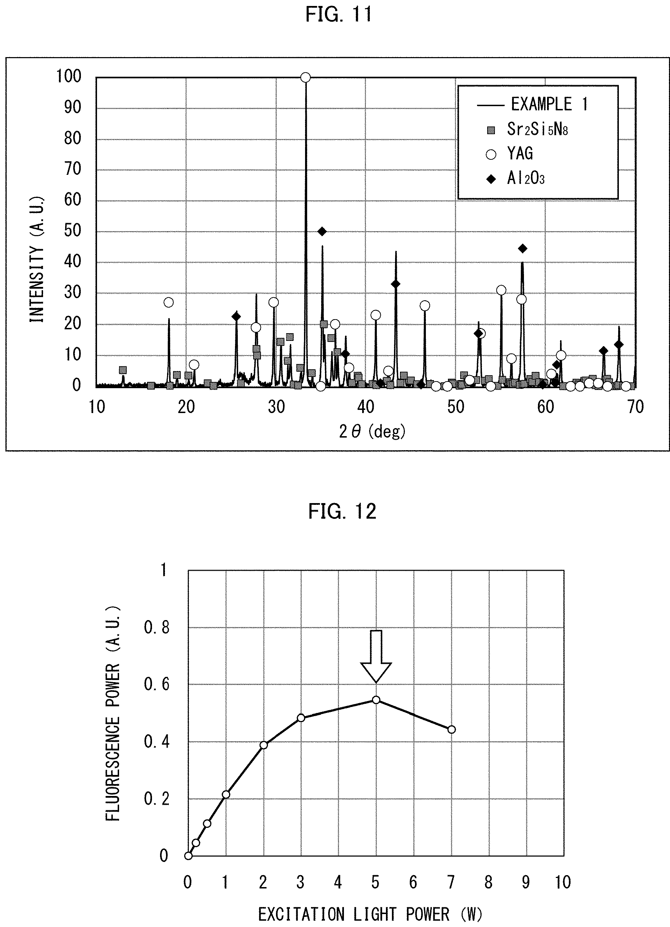

A powder X-ray diffractometer available from Rigaku Corporation was used to subject resulting composite ceramic to X-ray diffraction (XRD) measurement. A result of this is shown in Fig. 11.

Further, a phosphor evaluation device including a laser light source, an integrating sphere, and a spectrometer was used to measure laser power dependence of fluorescence power of the resulting composite ceramic. In the laser light source, an excitation laser beam had a beam diameter of 1 mm, an excitation laser wavelength was 450 nm, and the excitation laser beam was continuous light. A result of this is shown in Fig. 12. An arrow in Fig. 12 indicates a fluorescence saturation point.

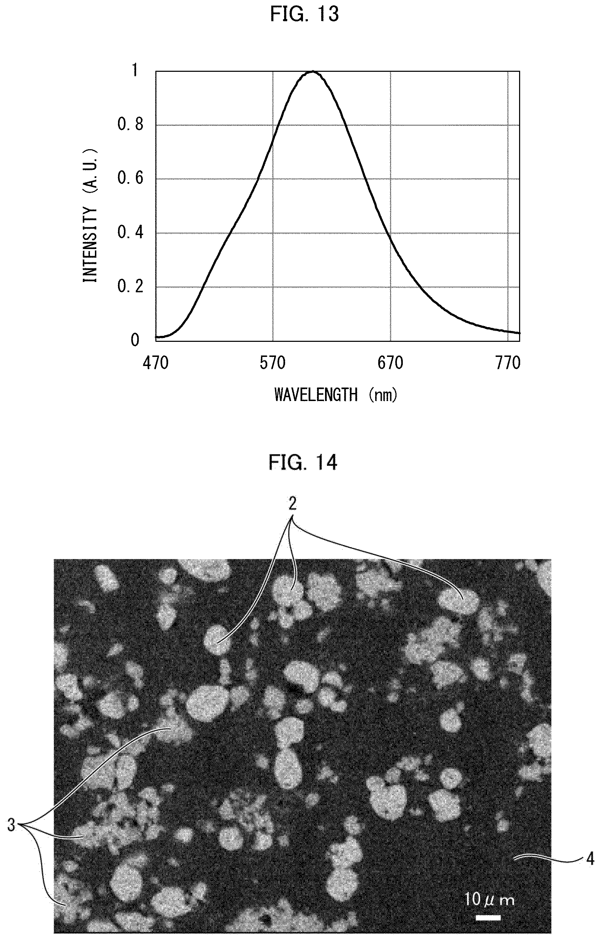

Furthermore, excitation light was emitted from the laser light source to the resulting composite ceramic, and a fluorescence spectrometer was used to measure a fluorescence spectrum of a beam transmitted from the composite ceramic through a lens and output. More specifically, a spectrometer available from Ocean Photonics was used to measure an emission spectrum under room temperature with an excitation wavelength fixed at 441 nm. A result of this is shown in Fig. 13.

### [Example 2]

As illustrated in Fig. 10, in Example 2, the raw material powders were mixed so that YAG, Sr₂Si₅N₈, and Al₂O₃ had respective contents of 15 wt%, 15 wt%, and 70 wt%. Except for this point, in Example 2, composite ceramic was produced by carrying out an operation identical to that carried out in Example 1.

A scanning electron microscope SEM available from JEOL Ltd. was used to observe a surface of the composite ceramic at an acceleration voltage of 20 kV, so that a SEM image was obtained. This SEM image is illustrated in Fig. 14.

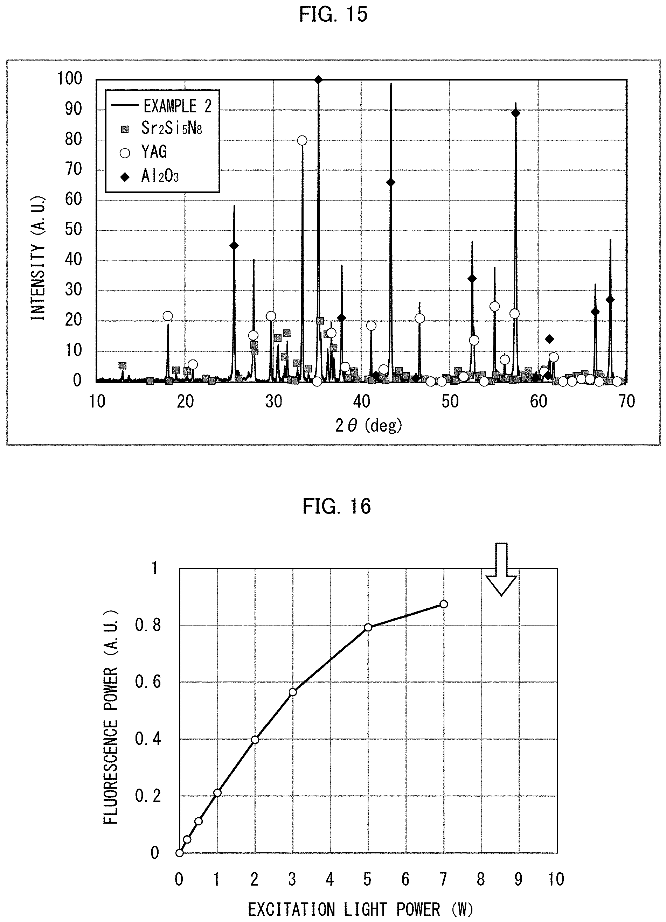

Further, an X-ray diffractometer identical to that used in Example 1 was used to subject resulting composite ceramic to XRD measurement. A result of this is shown in Fig. 15.

Furthermore, a phosphor evaluation device identical to that used in Example 1 was used to measure laser power dependence of fluorescence power of the resulting composite ceramic. A result of this is shown in Fig. 16.

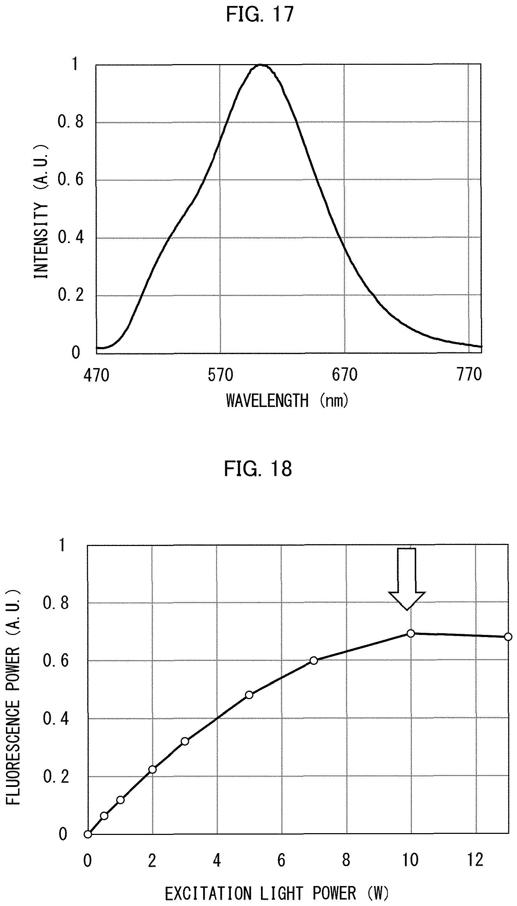

Moreover, a fluorescence spectrometer identical to that used in Example 1 was used to measure a fluorescence spectrum of a beam transmitted from the composite ceramic through a lens and output with use of a device identical to that used in Example 1. A result of this is shown in Fig. 17.

### [Example 3]

As illustrated in Fig. 10, in Example 3, the raw material powders were mixed so that YAG, Sr₂Si₅N₈, and Al₂O₃ had respective contents of 5 wt%, 5 wt%, and 90 wt%, and the mixed raw material powders were sintered at 1,300°C. Except for this point, in Example 3, composite ceramic was produced by carrying out an operation identical to that carried out in Example 1.

A phosphor evaluation device identical to that used in Example 1 was used to measure laser power dependence of fluorescence power of resulting composite ceramic. A result of this is shown in Fig. 18.

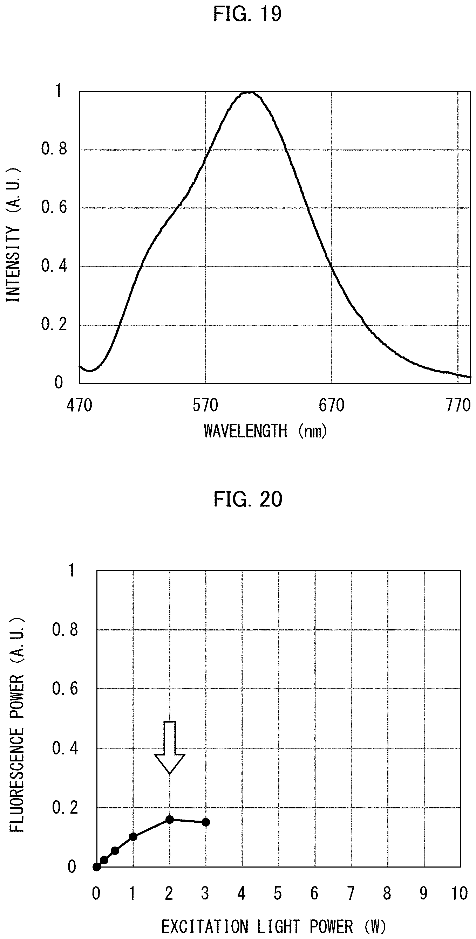

A fluorescence spectrometer identical to that used in Example 1 was used to measure a fluorescence spectrum of a beam transmitted from the composite ceramic through a lens and output with use of a device identical to that used in Example 1. A result of this is shown in Fig. 19.

### [Example 4]

As illustrated in Fig. 10, composite ceramic was produced as in the case of Example 1 except that the respective contents of YAG, Sr₂Si₅N₈, and Al₂O₃ were changed to 34.5 wt%, 34.5 wt%, and 31 wt%. Further, as in the case of Example 1, laser power dependence of fluorescence power of resulting composite ceramic was measured. Excitation light power at a fluorescence saturation point is 3 W, and an excitation light power tolerance is /(3.1415×0.05×0.05)=0.38 kW/cm². Furthermore, as in the case of Example 1, a fluorescence spectrum of a beam transmitted from the composite ceramic through a lens and output was measured. A peak wavelength was 600 nm.

### [Example 5]

As illustrated in Fig. 10, composite ceramic was produced as in the case of Example 1 except that the respective contents of YAG, Sr₂Si₅N₈, and Al₂O₃ were changed to 20 wt%, 10 wt%, and 70 wt%. Further, as in the case of Example 1, laser power dependence of fluorescence power of resulting composite ceramic was measured. Excitation light power at a fluorescence saturation point is 10 W, and an excitation light power tolerance is 10/(3.1415×0.05×0.05)=1.3 kW/cm². Furthermore, as in the case of Example 1, a fluorescence spectrum of a beam transmitted from the composite ceramic through a lens and output was measured. A peak wavelength was 590 nm.

### [Comparative Example 1]

As illustrated in Fig. 10, in Comparative Example 1, only Sr₂Si₅N₈ was filled in a mold and sintered at 1,800°C. Except for this point, in Comparative Example 1, composite ceramic for comparison was produced by carrying out an operation identical to that carried out in Example 1.

A phosphor evaluation device identical to that used in Example 1 was used to measure laser power dependence of fluorescence power of resulting composite ceramic. A result of this is shown in Fig. 20.

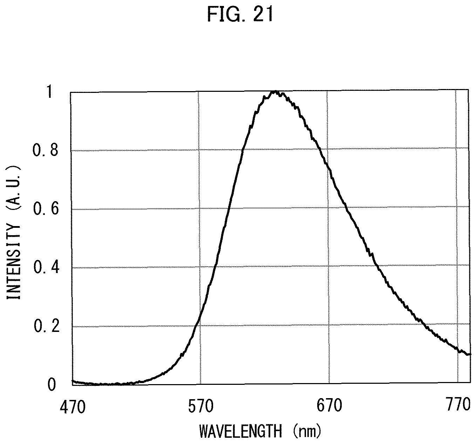

Moreover, a fluorescence spectrometer identical to that used in Example 1 was used to measure a fluorescence spectrum of a beam transmitted from the composite ceramic through a lens and output with use of a device identical to that used in Example 1. A result of this is shown in Fig. 21.

### [Comparative Example 2]

As illustrated in Fig. 10, Comparative Example 2 is binary composite ceramic of a Sr₂Si₅N₈ red phosphor and Al₂O₃.

### [Comparative Example 3]

As illustrated in Fig. 10, Comparative Example 3 is binary composite ceramic of YAG and Al₂O₃.

### [Comparative Example 4]

As illustrated in Fig. 10, though production of composite ceramic was attempted as in the case of Example 1 except that the respective contents of YAG, Sr₂Si₅N₈, and Al₂O₃ were changed to 15 wt%, 65 wt%, and 20 wt%, a sintered body was broken or damaged, so that it was impossible to obtain a composite. This did not result in evaluation of characteristics. A reason for this is considered to be that sintering has not been successfully carried out because YAG phosphor particles having a large particle size and Sr₂Si₅N₈ phosphor particles are contained in large amounts.

### [Comparative Example 5]

Study was similarly conducted except for the contents of YAG, Sr₂Si₅N₈, and Al₂O₃ of Example 5. A state of breakage or damage was similar to that in Comparative Example 4.

Table 1 shows laser power dependence and an output beam peak wavelength of composite ceramic of each of Examples 4 and 5.

### [Table 1]

**Table 1**

| | Laser power dependence | | Fluorescence spectrum |
|---|---|---|---|
| | Excitation light power at saturation point (W) | Excitation light power tolerance (kW/cm²) | Peak wavelength (nm) |
| Example 4 | 3 | 0.38 | 600 |
| Example 5 | 10 | 1.3 | 590 |
| Comparative Example 2 | Outside the scope of the present application | | |
| Comparative Example 3 | Outside the scope of the present application | | |
| Comparative Example 4 | Sintered body breakage | | |
| Comparative Example 5 | Sintered body breakage | | |

### [Example 6]

As illustrated in Fig. 22, in Example 6, MgO was used instead of Al₂O₃, the raw material powders were mixed so that YAG, Sr₂Si₅N₈, and MgO had respective contents of 15 wt%, 15 wt%, and 70 wt%, and the mixed raw material powders were sintered at 1,300°C. Except for this point, in Example 6, composite ceramic was produced by carrying out an operation identical to that carried out in Example 1.

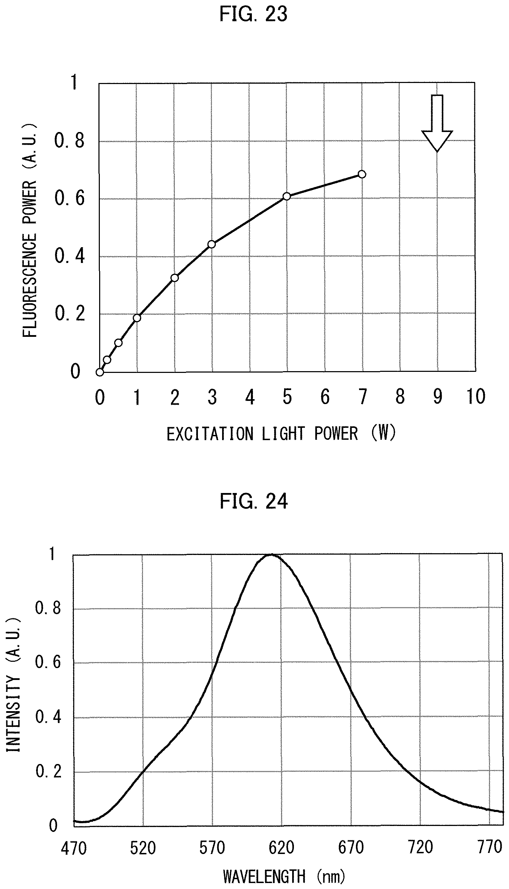

A phosphor evaluation device identical to that used in Example 1 was used to measure laser power dependence of fluorescence power of resulting composite ceramic. A result of this is shown in Fig. 23.

Moreover, a fluorescence spectrometer identical to that used in Example 1 was used to measure a fluorescence spectrum of a beam transmitted from the composite ceramic through a lens and output with use of a device identical to that used in Example 1. A result of this is shown in Fig. 24.

### [Example 7]

As illustrated in Fig. 22, in Example 7, approximately 10% of MgO was changed to AlN serving as a light scattering component, and the raw material powders were mixed so that YAG, Sr₂Si₅N₈, MgO, and AlN had respective contents of 15 wt%, 15 wt%, 63 wt%, and 7 wt%. Except for this point, in Example 7, composite ceramic was produced by carrying out an operation identical to that carried out in Example 1.

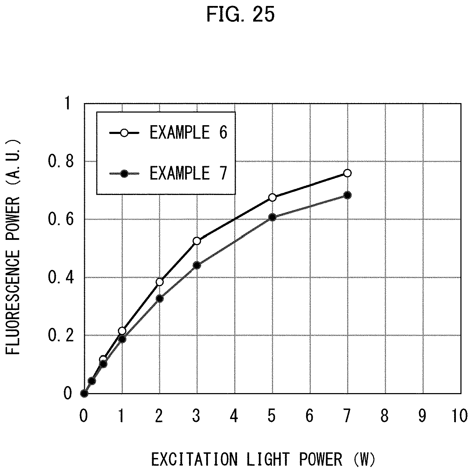

A phosphor evaluation device identical to that used in Example 1 was used to measure laser power dependence of fluorescence power of resulting composite ceramic. Fig. 25 illustrates a result of this together with laser power dependence of fluorescence power of the composite ceramic obtained in Example 6.

### [Comparative Example 6]

As illustrated in Fig. 22, Comparative Example 6 is binary composite ceramic of Sr₂Si₅N₈ and MgO.

### [Comparative Example 7]

As illustrated in Fig. 22, Comparative Example 7 is binary composite ceramic composed of YAG and MgO.

### [Comparative Example 8]

As illustrated in Fig. 22, though production of composite ceramic was attempted as in the case of Example 6 except that the respective contents of YAG, Sr₂Si₅N₈, and MgO were changed to 65 wt%, 15 wt%, and 20 wt%, a sintered body was destroyed or broken, so that it was impossible to obtain composite ceramic.

### [Comparative Example 9]

As illustrated in Fig. 22, though production of composite ceramic was attempted as in the case of Example 6 except that the respective contents of YAG, Sr₂Si₅N₈, and MgO were changed to 15 wt%, 65 wt%, and 20 wt%, a sintered body was destroyed or broken, so that it was impossible to obtain composite ceramic.

The SEM image illustrated in Fig. 14 is a backscattered electron image of the composite ceramic shown in Example 1. In the backscattered electron image, a part composed of a heavy element is imaged white, and a part composed of a light element is imaged dark. Further, each component has a shape that is in accordance with a shape of particles of a raw material. It has been confirmed from a result illustrated in Fig. 14 that resulting composite ceramic contains YAG, Sr₂Si₅N₈, and Al₂O₃, and Al₂O₃ is sintered so as to surround YAG and Sr₂Si₅N₈.

Furthermore, as illustrated in Figs. 11 and 15, the XRD measurement has resulted in observation of respective peaks of YAG, Sr₂Si₅N₈, and Al₂O₃. Note that the result of the XRD measurement and a diffraction intensity from a database are well matched each other, and no peak other than those of YAG, Sr₂Si₅N₈, and Al₂O₃ was observed.

Moreover, as is understood from, for example, Comparative Examples, etc. of Patent Literature 2, it is conventionally known that a nitride and an oxide are incompatible with each other. However, as illustrated in Figs. 11 and 15, it was successfully observed that, in the composite ceramic in accordance with the present disclosure, Sr₂Si₅N₈ serving as the nitride-based phosphor component remained also in a matrix component serving as an oxide and composed of, for example, Al₂O₃.

Further, from fluorescence spectra illustrated in Figs. 13, 17, 19, and 24, a peak of fluorescence generated from each of YAG and Sr₂Si₅N₈ was observed in each of Examples 1 to 4.

Furthermore, from a fluorescence spectrum illustrated in Fig. 21, a peak of fluorescence of only Sr₂Si₅N₈ was observed in Comparative Example 1.

Moreover, as illustrated in Fig. 12, in Example 1, fluorescence reaches saturation when excitation light power is 5 w, and a fluorescence saturation point is 5 W. For this reason, an excitation light power tolerance of Example 1 is 5/(3.1415×0.05×0.05)=0.64 kW/cm².

Further, as illustrated in Fig. 16, in Example 2, only excitation light power up to 7 W has been measured, but it is estimated from Fig. 16 that a fluorescence saturation point is not less than approximately 8 W. Thus, assuming that the fluorescence saturation point is 8 W, an excitation light power tolerance of Example 2 is 8/(3.1415×0.05×0.05)=1.0 kW/cm².

Furthermore, as illustrated in Fig. 18, a fluorescence saturation point is 10 W in Example 3. For this reason, an excitation light power tolerance of Example 3 is 10/(3.1415×0.05×0.05)=1.3 kW/cm².

Moreover, as illustrated in Fig. 20, a fluorescence saturation point is 2 W in Comparative Example 1. For this reason, an excitation light power tolerance of Comparative Example 1 is 2/(3.1415×0.05×0.05)=0.25 kW/cm².

Further, as illustrated in Fig. 23, in Example 4, only excitation light power up to 7 W has been measured, but it is estimated from Fig. 23 that a fluorescence saturation point is not less than approximately 9 W. Thus, assuming that the fluorescence saturation point is 9 W, an excitation light power tolerance of Example 4 is 9/(3.1415×0.05×0.05)=1.1 kW/cm².

Thus, it is understood from results illustrated in Figs. 12, 16, 18, 20, and 23 that a nitride-based phosphor has low excitation light power tolerance (laser power tolerance) and that addition of a garnet-based phosphor component and a matrix component greatly improves excitation light power tolerance.

Furthermore, it has been confirmed from a result illustrated in Fig. 25 that fluorescence power is improved by not less than approximately 10% in a case where part of a matrix component contains, as a light scattering component, for example, AlN having a high refractive index.

### [Example 8]

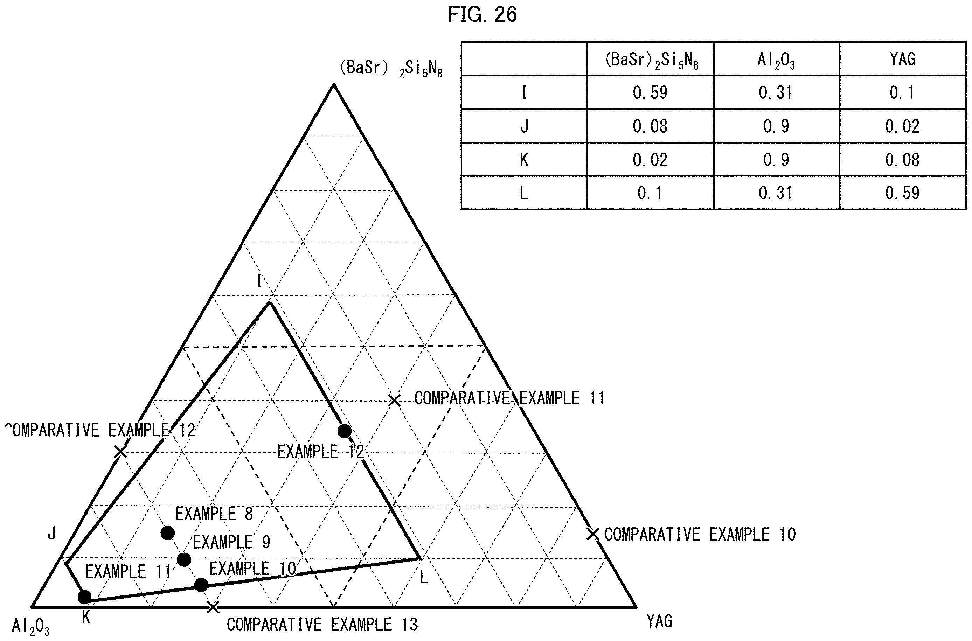

As illustrated in Fig. 26, composite ceramic was produced as in the case of Example 1 except that the respective contents of YAG, (BaSr)₂Si₅N₈, and Al₂O₃ were changed to 15 wt%, 15 wt%, and 70 wt%. Further, as in the case of Example 1, laser power dependence of fluorescence power of resulting composite ceramic was measured. Excitation light power at a fluorescence saturation point is 6 W, and an excitation light power tolerance is 6/(3.1415×0.05×0.05)=0.76 kW/cm². Furthermore, as in the case of Example 1, a fluorescence spectrum of a beam transmitted from the composite ceramic through a lens and output was measured. A peak wavelength was 605 nm.

### [Example 9]

As illustrated in Fig. 26, composite ceramic was produced as in the case of Example 1 except that the respective contents of YAG, (BaSr)₂Si₅N₈, and Al₂O₃ were changed to 20 wt%, 10 wt%, and 70 wt%. Further, as in the case of Example 1, laser power dependence of fluorescence power of resulting composite ceramic was measured.

### [Example 10]

As illustrated in Fig. 26, composite ceramic was produced as in the case of Example 1 except that the respective contents of YAG, (BaSr)₂Si₅N₈, and Al₂O₃ were changed to 25 wt%, 5 wt%, and 70 wt%. Further, as in the case of Example 1, laser power dependence of fluorescence power of resulting composite ceramic was measured.

### [Example 11]

As illustrated in Fig. 26, composite ceramic was produced as in the case of Example 1 except that the respective contents of YAG, (BaSr)₂Si₅N₈, and Al₂O₃ were changed to 8 wt%, 2 wt%, and 90 wt%. Further, as in the case of Example 1, laser power dependence of fluorescence power of resulting composite ceramic was measured.

### [Example 12]

As illustrated in Fig. 26, composite ceramic was produced as in the case of Example 1 except that the respective contents of YAG, (BaSr)₂Si₅N₈, and Al₂O₃ were changed to 35 wt%, 33 wt%, and 32 wt%.

### [Comparative Example 10]

As illustrated in Fig. 26, though production of composite ceramic was attempted as in the case of Example 8 except that the respective contents of YAG, (BaSr)₂Si₅N₈, and Al₂O₃ were changed to 85 wt%, 15 wt%, and 0 wt%, a sintered body was destroyed or broken, so that it was impossible to obtain composite ceramic.

### [Comparative Example 11]

As illustrated in Fig. 26, though production of composite ceramic was attempted as in the case of Example 8 except that the respective contents of YAG, (BaSr)₂Si₅N₈, and Al₂O₃ were changed to 40 wt%, 40 wt%, and 20 wt%, a sintered body was destroyed or broken, so that it was impossible to obtain composite ceramic.

### [Comparative Example 12]

As illustrated in Fig. 26, composite ceramic was produced as in the case of Example 8 except that the respective contents of YAG, (BaSr)₂Si₅N₈, and Al₂O₃ were changed to 0 wt%, 30 wt%, and 70 wt%.

### [Comparative Example 13]

As illustrated in Fig. 26, composite ceramic was produced as in the case of Example 8 except that the respective contents of YAG, (BaSr)₂Si₅N₈, and Al₂O₃ were changed to 30 wt%, 0 wt%, and 70 wt%.

Table 2 shows laser power dependence and an output beam peak wavelength of composite ceramic of each of Examples 8 to 12 and Comparative Examples 10 to 13.

### [Table 2]

**Table 2**

| | Laser power dependence | | Fluorescence spectrum |
|---|---|---|---|
| | Excitation light power at saturation point (W) | Excitation light power tolerance (kW/cm²) | Peak wavelength (nm) |
| Example 8 | 6 | 0.76 | 605 |
| Example 9 | 7 | 0.89 | 600 |
| Example 10 | 11 | 1.4 | 590 |
| Example 11 | 11 | 1.4 | 590 |
| Example 12 | 4 | 0.51 | 605 |
| Comparative Example 10 | Breakage | | |
| Comparative Example 11 | Breakage | | |
| Comparative Example 12 | Outside the scope of the present application | | |
| Comparative Example 13 | Outside the scope of the present application | | |

### [Example 13]

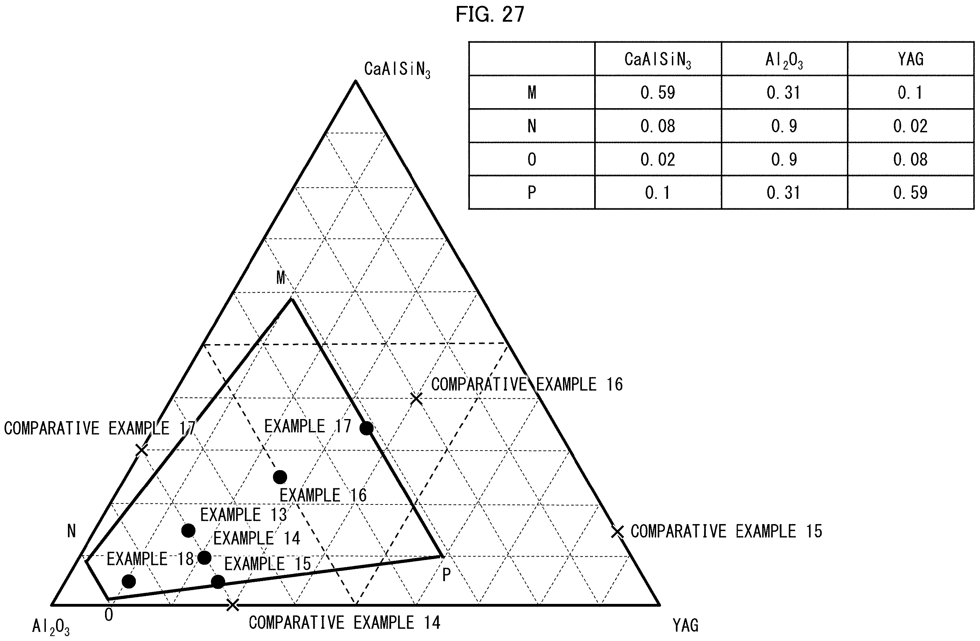

As illustrated in Fig. 27, composite ceramic was produced as in the case of Example 1 except that the respective contents of YAG, (CaAl)SiN₃, and Al₂O₃ were changed to 15 wt%, 15 wt%, and 70 wt%.

### [Example 14]

As illustrated in Fig. 27, composite ceramic was produced as in the case of Example 1 except that the respective contents of YAG, (CaAl)SiN₃, and Al₂O₃ were changed to 20 wt%, 10 wt%, and 70 wt%.

### [Example 15]

As illustrated in Fig. 27, composite ceramic was produced as in the case of Example 1 except that the respective contents of YAG, (CaAl)SiN₃, and Al₂O₃ were changed to 25 wt%, 5 wt%, and 70 wt%.

### [Example 16]

As illustrated in Fig. 27, composite ceramic was produced as in the case of Example 1 except that the respective contents of YAG, (CaAl)SiN₃, and Al₂O₃ were changed to 25 wt%, 25 wt%, and 50 wt%.

### [Example 17]

As illustrated in Fig. 27, composite ceramic was produced as in the case of Example 1 except that the respective contents of YAG, (CaAl)SiN₃, and Al₂O₃ were changed to 35 wt%, 33 wt%, and 32 wt%.

### [Example 18]

As illustrated in Fig. 27, composite ceramic was produced as in the case of Example 1 except that the respective contents of YAG, (CaAl)SiN₃, and Al₂O₃ were changed to 10 wt%, 5 wt%, and 85 wt%.

### [Comparative Example 14]

As illustrated in Fig. 27, composite ceramic was produced as in the case of Example 13 except that the respective contents of YAG, (CaAl)SiN₃, and Al₂O₃ were changed to 30 wt%, 0 wt%, and 70 wt%.

### [Comparative Example 15]

As illustrated in Fig. 27, though production of composite ceramic was attempted as in the case of Example 13 except that the respective contents of YAG, (CaAl)SiN₃, and Al₂O₃ were changed to 85 wt%, 15 wt%, and 0 wt%, it was impossible to obtain a molded product due to destruction of a sintered body, so that it was impossible to obtain composite ceramic.

### [Comparative Example 16]

As illustrated in Fig. 27, though production of composite ceramic was attempted as in the case of Example 13 except that the respective contents of YAG, (CaAl)SiN₃, and Al₂O₃ were changed to 40 wt%, 40 wt%, and 20 wt%, it was impossible to obtain a molded product due to destruction of a sintered body, so that it was impossible to obtain composite ceramic.

### [Comparative Example 17]

As illustrated in Fig. 27, composite ceramic was produced as in the case of Example 13 except that the respective contents of YAG, (CaAl)SiN₃, and Al₂O₃ were changed to 0 wt%, 30 wt%, and 70 wt%.

### [Reference Example 1]

Composite ceramic was produced as in the case of Example 11 except that the respective contents of (i) YAG, (ii) (CaAl)SiN₃ and (LaY)₃Si₆N₁₁, and (iii) Al₂O₃ were changed to 20 wt%, 10 wt% in total, and 70 wt%.

### [Reference Example 2]

Composite ceramic was produced as in the case of Example 11 except that the respective contents of (i) YAG, (ii) (CaAl)SiN₃ and (LaY)₃Si₆N₁₁, and (iii) Al₂O₃ were changed to 25 wt%, 5 wt% in total, and 70 wt%.

### [Reference Example 3]

Composite ceramic was produced as in the case of Example 11 except that the respective contents of (i) YAG, (ii) (CaAl)SiN₃ and (LaY)₃Si₆N₁₁, and (iii) Al₂O₃ were changed to 30 wt%, 0 wt% in total, and 70 wt%.

### [Reference Example 4]

Composite ceramic was produced as in the case of Example 11 except that the respective contents of (LaY)₃Si₆N₁₁, (CaAl)SiN₃, and Al₂O₃ were changed to 20 wt%, 10 wt%, and 70 wt%.

### [Reference Example 5]

Composite ceramic was produced as in the case of Example 11 except that the respective contents of (LaY)₃Si₆N₁₁, (CaAl)SiN₃, and Al₂O₃ were changed to 25 wt%, 5 wt%, and 70 wt%.

### [Reference Example 6]

Composite ceramic was produced as in the case of Example 11 except that the respective contents of (LaY)₃Si₆N₁₁, (CaAl)SiN₃, and Al₂O₃ were changed to 30 wt%, 0 wt%, and 70 wt%.

### [Reference Example 7]

Composite ceramic was produced as in the case of Example 1 except that the respective contents of (LaY)₃Si₆N₁₁, MgO, and Al₂O₃ were changed to 30 wt%, 0 wt%, and 70 wt%.

### [Reference Example 8]

Composite ceramic was produced as in the case of Example 1 except that the respective contents of (LaY)₃Si₆N₁₁, MgO, and Al₂O₃ were changed to 30 wt%, 35 wt%, and 35 wt%.

### [Reference Example 9]

Composite ceramic was produced as in the case of Example 1 except that the respective contents of (LaY)₃Si₆N₁₁, MgO, and Al₂O₃ were changed to 30 wt%, 70 wt%, and 0 wt%.

### [Reference Example 10]

Composite ceramic was produced as in the case of Example 1 except that the respective contents of (LaY)₃Si₆N₁₁, MgO, and Al₂O₃ were changed to 30 wt%, 60 wt%, and 10 wt%.

### [Reference Example 11]

Composite ceramic was produced as in the case of Example 1 except that the respective contents of (LaY)₃Si₆N₁₁, MgO, and Al₂O₃ were changed to 10 wt%, 50 wt%, and 40 wt%.

### [Reference Examples 12 to 16]

Composite ceramic of Reference Example 12 was obtained by carrying out an annealing treatment in which the composite ceramic of Example 11 was heated in ammonia atmosphere at 1,000°C for 3 hours. Composite ceramic of Reference Example 13 was obtained by carrying out an annealing treatment in which the composite ceramic of Example 18 was heated in ammonia atmosphere at 1,250°C for 2 hours. Composite ceramic of Reference Example 14 was obtained by carrying out an annealing treatment in which the composite ceramic of Reference Example 4 was heated in ammonia atmosphere at 1,000°C for 3 hours. Composite ceramic of Reference Example 15 was obtained by carrying out an annealing treatment in which the composite ceramic of Reference Example 9 was heated in ammonia atmosphere at 1,250°C for 2 hours. Composite ceramic of Reference Example 16 was obtained by carrying out an annealing treatment in which the composite ceramic of Reference Example 8 was heated in ammonia atmosphere at 1,000°C for 3 hours.

A colorimeter was used to measure object colors (an L* value, an a* value, a b* value, and chroma) in an L*a*b* color system for the composite ceramic of each of Reference Examples 12 to 16. An object color before annealing treatment was also measured for the composite ceramic of Example 33.

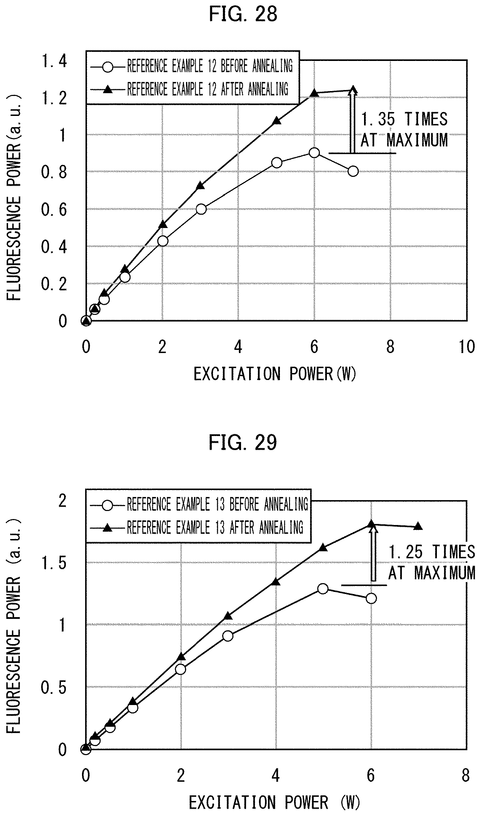

Further, for the composite ceramic of each of Reference Examples 12 to 163, fluorescence power was measured before and after the annealing treatment, and a ratio of maximum fluorescence power after the annealing treatment to maximum fluorescence power before the annealing treatment was determined. For example, in the case of Reference Example 12, as illustrated in Fig. 28, the ratio is a ratio of maximum fluorescence power after the annealing treatment to saturated fluorescence power before the annealing treatment. Furthermore, for example, in the case of Reference Example 13, as illustrated in Fig. 29, the ratio is a ratio of saturated fluorescence power after the annealing treatment to saturated fluorescence power before the annealing treatment. A result is shown in Table 3. In Table 3, "Ba258" represents "(Ba_{0.6}Sr_{0.4})₂Si₅N₈", "CASN" represents "CaSiAlN₃", and "YAG" represents "Y₃Al₅O₁₂" activated by Ce.

### [Table 3]

**Table 3**

| Reference Example No. | Composition | Annealing condition | Object color | | | |
|---|---|---|---|---|---|---|
| | | | Before annealing | | | |
| | | | L* | a* | b* | Chroma |
| 12 | 0.15 Ba258 | 1,000°C | 79.0 | 15.0 | 48.1 | 50.4 |
| | 0.15 YAG | 3 hours | | | | |
| | 0.7 Al₂O₃ | | | | | |
| 13 | 0.05 CASN | 1,250°C | 86.5 | 2.1 | 49.0 | 49.0 |
| | 0.25 YAG | 2 hours | | | | |
| | 0.7 Al₂O₃ | | | | | |
| 14 | 0.1 CASN | 1,000°C | 83.9 | 12.3 | 43.2 | 44.9 |
| | 0.2 LYSN | 3 hours | | | | |
| | 0.7 Al₂O₃ | | | | | |
| 15 | 0.3 LYSN | 1,250°C | 88.6 | 3.0 | 54.5 | 54.6 |
| | 0.7 Al₂O₃ | 2 hours | | | | |
| 16 | 0.3 LYSN | 1,000°C | 82.3 | 2.0 | 56.7 | 56.7 |
| | 0.35 Al₂O₃ | 3 hours | | | | |
| | 0.35 MgO | | | | | |

| Reference Example No. | Object color | | | | Fluorescence power ratio (Time) |
|---|---|---|---|---|---|
| | After annealing | | | | |
| | L* | a* | b* | Chroma | |
| 12 | 81.1 | 17.8 | 51.6 | 54.6 | 1.5 |
| 13 | 87.6 | 3.0 | 55.5 | 55.6 | 1.25 |
| 14 | 86.2 | 13.3 | 44.7 | 46.6 | 1.2 |
| 15 | 91.7 | 3.6 | 59.7 | 59.8 | 1.3 |
| 16 | 84.7 | 1.8 | 61.8 | 61.8 | 1.1 |

As shown in Table 3, the annealing treatment in an ammonia atmosphere further increases fluorescence power. Further, as illustrated in Figs. 28 and 29, fluorescence power after the annealing treatment further tends to reach saturation with excitation light power than fluorescence power before the annealing treatment. Thus, it is understood that the annealing treatment also enhances excitation light power tolerance.

### [Reference Example 17]

Composite ceramic of Reference Example 17 was obtained by carrying out an annealing treatment in which the composite ceramic of Reference Example 8 was heated in a nitrogen atmosphere at 1, 150°C for 3 hours. The composite ceramic of Reference Example 17 was whitened, and no fluorescence was observed.

In a case where a phosphor was sintered in a nitrogen atmosphere, chroma was reduced by release of nitrogen or deactivation of an activator, and an efficiency was reduced by, for example, an internal quantum efficiency. This is considered to be due to release of nitrogen in a composition or deactivation of the activator. In both ternary composite ceramic (two types of phosphor components and a matrix component) and binary composite ceramic (one type of phosphor component and a matrix component), a fluorescence intensity was further increased by annealing a sintered phosphor in an ammonia atmosphere.

### [Evaluation]

A thermal conductivity was measured for the composite ceramic of each of Examples 16 to 18 and Reference Examples 7, 8, and 11. Further, Vickers hardness was measured for the composite ceramic of each of Examples 16 to 18 and Reference Examples 7, 8, and 11. A result is shown in the following Table 4.

### [Table 4]

**Table 4**

| | Composition | Thermal conductivity (W/(m·K)) | Vickers hardness (HV) |
|---|---|---|---|
| Example 18 | 0.05 CASN | 19.3 | 2,070 |
| | 0.1 YAG | | |
| | 0.85 Al₂O₃ | | |
| Example 16 | 0.25 CASN | 8.9 | 1,265 |
| | 0.25 YAG | | |
| | 0.5 Al₂O₃ | | |
| Example 17 | 0.345 CASN | 4.8 | 1,905 |
| | 0.31 Al₂O₃ | | |
| | 0.345 YAG | | |
| Reference Example 11 | 0.5 MgO | 11.8 | 1,665 |
| | 0.4 Al₂O₃ | | |
| | 0.1 LYSN | | |
| Reference Example 8 | 0.35 MgO | 6.2 | 944 |
| | 0.35 Al₂O₃ | | |
| | 0.3 LYSN | | |
| Reference Example 7 | 0.7 Al₂O₃ | 11.6 | 1,657 |
| | 0.3 LYSN | | |

In ternary composite ceramic, both the thermal conductivity and the Vickers hardness tend to be higher in accordance with an increase in amount of matrix. In binary composite ceramic, both the thermal conductivity and the Vickers hardness tend to show sufficiently high numerical values. Further, in the result for the binary composite ceramic, both the thermal conductivity and the Vickers hardness tend to decrease in accordance with a degree of sintering.

### [Examples of phosphor element]

The composite ceramic of Example 18 was used to produce a phosphor element A and a phosphor element B. The phosphor element A is composed by forming a mirror body on one main surface of the composite ceramic of Example 21 with a thickness of 100 µm, and using an inorganic adhesive to adhere the composite ceramic to a base material of a copper alloy on the mirror body side surface. The phosphor element B has been produced as in the case of the phosphor element A except that the composite ceramic of Example 18 has a thickness of 50 µm.

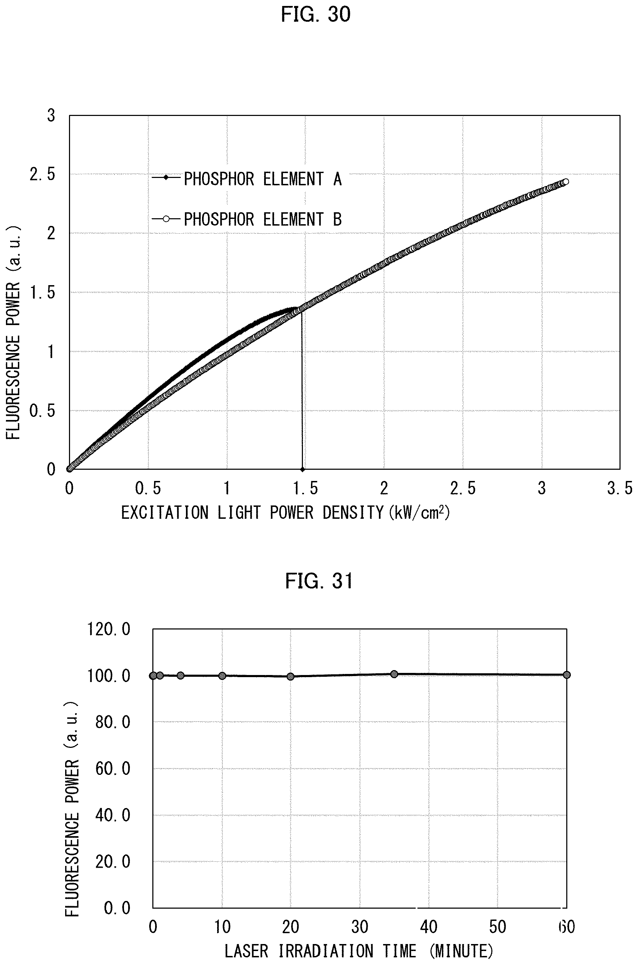

Fig. 30 shows a relationship between (a) excitation light power when composite ceramic is irradiated with laser light and (b) fluorescence power at that time for each of the phosphor element A and the phosphor element B.

Both the phosphor element A and the phosphor element B have higher fluorescence power in accordance with an increase in excitation light power. As compared with the phosphor element A, the phosphor element B has more increased fluorescence power in accordance with an increase in excitation light power. In the phosphor element B, excitation light power is more appropriately converted to fluorescence power than in the phosphor element A. Thus, it is understood that the composite ceramic of Example 21 efficiently emits fluorescence even in a case where the composite ceramic is thin.

### [Durability]

A phosphor element of the present invention was prepared, and fluorescence power was measured in the case of continuous laser light irradiation. A result is shown in Fig. 31.

The present disclosure is not limited to the embodiments, but can be altered variously by a skilled person in the art within the scope of the claims. The present disclosure also encompasses, in its technical scope, any embodiment derived by appropriately combining technical means disclosed in differing embodiments. Furthermore, it is possible to form a new technical feature by combining technical means disclosed in differing embodiments.

### Reference Signs List

1, 11, 12, 21, 31 Composite ceramic
2 Garnet-based phosphor component
3 Nitride-based phosphor component
4 Matrix component
12 Light scattering component
22 First ceramic layer
23 Second ceramic layer
31a Unevenness
50 Phosphor element
51 Base material
60 Laser lighting device
61 Laser light source
62, 63 Lens

## Claims

1. Composite ceramic comprising a sintered body containing a garnet-based phosphor component, a nitride-based phosphor component, and a matrix component,
the matrix component being at least one selected from the group consisting of MgO and Al₂O₃,
the matrix component having a content in a range of not less than 31 wt% and not more than 95 wt% of all components of the composite ceramic, and
the matrix component being sintered so as to surround the garnet-based phosphor component and the nitride-based phosphor component.

2. The composite ceramic as set forth in claim 1, wherein the matrix component that is contained per unit volume of the composite ceramic has a number average particle size in a range of not less than 0.01 µm and not more than 10 µm.

3. The composite ceramic as set forth in claim 2, wherein the garnet-based phosphor component contains at least one selected from the group consisting of (Ce, Y)₃Al₅O₁₂, (Ce, Lu)₃Al₅O₁₂, (Ce, Lu, Y)₃Al₅O₁₂, and (Ce, Lu, Y)₃(Al, Ga)₅O₁₂.

4. The composite ceramic as set forth in claim 1, wherein the nitride-based phosphor component contains at least one selected from the group consisting of Sr₂Si₅N₈, (Sr, Ba)₂Si₅N₈, and (Ca, Sr, Ba)₂Si₅N₈, the at least one each having been activated by at least one element selected from the group consisting of Eu and Ce.

5. The composite ceramic as set forth in claim 4, wherein
at least one selected from the group consisting of part of Si and part of N is substituted,
Si is substituted with Al in a case where Si is partially substituted, and
N is substituted with O in a case where N is partially substituted.

6. The composite ceramic as set forth in claim 1, wherein the nitride-based phosphor component contains at least one selected from the group consisting of CaAlSiN₃ and (Ca, Sr)AlSiN₃, the at least one each having been activated by at least one element selected from the group consisting of Eu and Ce.

7. The composite ceramic as set forth in claim 1, wherein
in a triangular diagram where a content of a total of the nitride-based phosphor component, the matrix component, and the garnet-based phosphor component is 100 wt%, respective contents of the nitride-based phosphor component, the matrix component, and the garnet-based phosphor component are in a range surrounded by straight lines connecting:
a point A at which the content of the nitride-based phosphor component is 59 wt%, the content of the matrix component is 31 wt%, and the content of the garnet-based phosphor component is 10 wt%;
a point B at which the content of the nitride-based phosphor component is 8 wt%, the content of the matrix component is 90 wt%, and the content of the garnet-based phosphor component is 2 wt%;
a point C at which the content of the nitride-based phosphor component is 2 wt%, the content of the matrix component is 90 wt%, and the content of the garnet-based phosphor component is 8 wt%; and
a point D at which the content of the nitride-based phosphor component is 10 wt%, the content of the matrix component is 31 wt%, and the content of the garnet-based phosphor component is 59 wt%.

8. The composite ceramic as set forth in claim 1, wherein
the composite ceramic further contains a light scattering component having a refractive index that is higher by not less than 0.21 than a refractive index of the matrix component, and
a content of a total of the matrix component and the light scattering component is not less than 31 wt% and not more than 95 wt% of all the components of the composite ceramic.

9. The composite ceramic as set forth in claim 8, wherein the light scattering component is at least one selected from the group consisting of AlN, cBN, SiC, an AlN-SiC solid solution, and diamond.

10. The composite ceramic as set forth in claim 8, wherein the light scattering component that is contained per unit volume of the composite ceramic has a number average particle size of not less than 0.25 µm and not more than 40 µm.

11. The composite ceramic as set forth in claim 1, wherein an in-line optical transmittance at a wavelength of 450 nm is not less than 0.01% and not more than 20% at a thickness of 100 µm of the composite ceramic.

12. The composite ceramic as set forth in claim 1, wherein
the composite ceramic further contains a sintering agent,
in a case where the matrix component is Al₂O₃, the sintering agent is at least one selected from the group consisting of Si₃N₄, SiO₂, CaO, MgO, ZnO, and Y₂O₃, and
in a case where the matrix component contains at least MgO among MgO and Al₂O₃, the sintering agent is at least one selected from the group consisting of Si₃N₄, SiO₂, CaO, ZnO, and Y₂O₃.

13. The composite ceramic as set forth in claim 1, wherein the composite ceramic has a laminated structure in which a layer composed of at least one selected from the group consisting of MgO and Al₂O₃ is joined to one main surface of the composite ceramic.

14. The composite ceramic as set forth in claim 1, wherein the composite ceramic has an excitation light power tolerance of not less than 0.5 kW/cm².

15. The composite ceramic as set forth in claim 1, wherein the composite ceramic has one main surface that is provided with unevenness.

16. A phosphor element comprising:
composite ceramic recited in any one of claims 1 to 15; and
a base material for fixing the composite ceramic.

17. A laser lighting device comprising:
a phosphor element recited in claim 16;
a laser light source that emits excitation light to the composite ceramic of the phosphor element; and
a light collecting member that collects light output from the composite ceramic of the phosphor element.

18. A method for producing composite ceramic, comprising:
a mixing step of mixing a first raw material powder containing a garnet-based phosphor component, a nitride-based phosphor component, and a matrix component;
a first raw material powder accommodating step of accommodating the mixed first raw material powder in a mold;
a sintering step of using spark plasma sintering or hot pressing to sinter the first raw material powder that has been accommodated in the mold; and
a mold release step of removing, from the mold, a sintered body obtained in the sintering step.

19. The method as set forth in claim 18, further comprising:
a second raw material powder accommodating step of accommodating, in the mold, a second raw material powder that is less than the first raw material powder and that is composed of at least one selected from the group consisting of MgO and Al₂O₃,
in the sintering step, by sintering the first raw material powder and the second raw material powder that have been accommodated in the mold, a sintered body being formed in which a sintered body of the first raw material powder and a sintered body of the second raw material powder which sintered body is thinner than the first raw material powder are joined.

20. The method as set forth in claim 18, further comprising a cutting/polishing step of subjecting the sintered body to at least one selected from the group consisting of cutting and polishing.

21. The method as set forth in claim 18, further comprising an unevenness forming step of forming unevenness on one main surface of the sintered body.

22. The method as set forth in claim 21, wherein the unevenness is formed by a dicer, laser processing, or polishing in the unevenness forming step.
